# EUROPEAN PATENT APPLICATION

(11) **EP 4 838 604 A1**
(43) Date of publication of application: **11.11.2026**
(21) Application number: 24916145.6
(22) Date of filing: 15.01.2024
(51) Int. Cl.: H01M 10/0525, H01M 4/485, H01M 4/505, H01M 4/525

(54) **HIGH-NICKEL POSITIVE ELECTRODE MATERIAL, SECONDARY BATTERY AND ELECTRIC DEVICE**

(30) Priority: 12.01.2024 CN 202410045143
(71) Applicant: Songshan Lake Materials Laboratory, Dongguan, Guangdong 523777 (CN); Citic Metal (Ningbo) Co. Ltd., Beijing 100004 (CN)
(72) Inventor: BEN, Liubin, Dongguan, Guangdong 523777 (CN); LIU, Zhongzhu, Beijing 100004 (CN); HUANG, Xuejie, Dongguan, Guangdong 523777 (CN); GUO, Aimin, Beijing 100004 (CN); LI, Yang, Dongguan, Guangdong 523777 (CN)
(74) Representative: Metida
(86) International application number: PCT/CN2024/072375
(87) International publication number: WO 2025/148081

(57) **Abstract**

A high-nickel positive electrode material, a secondary battery, and an electric device. The positive electrode material satisfies: 20 ≤ A×B ≤ 50; where A is a mixed occupancy ratio of lithium atoms to nickel atoms in the positive electrode material, and B is an average number of primary particles per square micron in a cross-section of secondary particles with a particle diameter of 5-15 µm in the positive electrode material. In a product to which the positive electrode material is applied, primary particles in secondary particles are protected from the risk of crushing under compression caused by an excessive close packing thereof, and a sufficient transport space for lithium ion de/intercalation can also be provided; in addition, the problem of lithium precipitation caused by mixing of lithium atoms and nickel atoms is avoided during charging and discharging. Thus, the product exhibits desirable charging and discharging activity and cycling stability.

## Description

### TECHNICAL FIELD

The present disclosure relates to the field of energy storage, and specifically to a high-nickel positive electrode material, a secondary battery, and an electric device.

### BACKGROUND

Among a new generation of energy storage devices, lithium-ion batteries have gradually become market leaders due to their high energy density, high economic benefits, and high environmental friendliness. As a core part of a lithium-ion battery, a positive electrode plate has a great influence on the charge/discharge capacity and service life of the entire device. In particular, for mainstream positive electrode plates including a ternary material, it has been found in researches that various physical and chemical parameters, such as a compacted density of the electrode plate itself and a type and proportion of ternary elements in an active material, can cause great differences in the electrochemical performances of the final electrode plates when used in lithium-ion batteries.

Since most ternary materials are prepared by calcination, the crystal phase of the product transforms during the calcination process. In particular, during the preparation of nickel-containing materials, a mixed occupancy ratio of lithium atoms to nickel atoms in the ternary materials (mainly obtained by XRD characterization followed by refinement and fitting of diffraction patterns) also changes with the calcination temperature. Existing research theories believe that a lower mixed occupancy ratio of lithium atoms to nickel atoms leads to a better electrochemical performance of a ternary material. Therefore, when investigating preparation conditions for a specific ternary material, a calcination temperature corresponding to a lower Li/Ni mixed occupancy ratio is generally taken as a preferred condition.

However, in practical applications, ternary materials prepared under preferred conditions do not exhibit expected electrochemical performances, and even show large deviations. If this problem is not solved, the pre-research and development costs of the ternary materials will remain high, and the electrochemical performances of the ternary materials still need to be improved.

### SUMMARY

Based on the deficiencies of the prior art, an objective of the present disclosure is to provide a high-nickel positive electrode material. By defining parameters, A and B, of the high-nickel positive electrode material within specific ranges, a high charge-discharge specific capacity and ideal cycling stability can be achieved.

To achieve the above objective, the present disclosure adopts the following technical solutions.

A positive electrode material, including a lithium element and a nickel element, where the positive electrode material includes primary particles and secondary particles formed by agglomeration of the primary particles, and the positive electrode material satisfies: 20 ≤ A×B ≤ 50;
where A is a mixed occupancy ratio of lithium atoms to nickel atoms in the positive electrode material, and B is an average number of primary particles per square micron in a cross-section of secondary particles with a particle diameter of 5-15 µm in the positive electrode material.

The mixed occupancy ratio of lithium atoms to nickel atoms in the positive electrode material of the present disclosure refers to a molar ratio of lithium atoms to nickel atoms in a layered structure of the positive electrode material. Specifically, it is defined by a verifiable definition: the mixed occupancy ratio of lithium atoms to nickel atoms (Li/Ni) is obtained by calculating XRD diffraction peaks of the positive electrode material powder using common structure refinement software (such as TOPAS, Fullproof, GSAS). The specific steps include importing the raw pattern data into the software, correcting scale, unit cell parameters, and instrument zero point, adjusting scale factors (W, U, V, etc.), correcting Occ, as well as refining and fitting the corresponding atomic coordinate data. The fitted data are only the data within a 2θ range of 10° to 90° of the XRD pattern.

The inventors have found that for nickel-containing positive electrode materials, the well-known Li/Ni mixed occupancy ratio (commonly referred to as Li/Ni mixed ratio) is not the only parameter affecting the electrochemical performance of the positive electrode materials. Since doping elements in the positive electrode material are not distributed in a gradient concentration, when conditions change during the calcination, the Li/Ni mixed occupancy ratio changes, and the particle morphology of the material also changes. In particular, as the calcination temperature gradually increases, a size of the primary particles in the material increases (at this time, a size of the secondary particles may not change significantly). Large primary particles generate large compressive stress during charge and discharge cycles, leading to fine cracks in the active material on the surface of the electrode plate, ultimately significantly reducing the cycling stability of the products. However, if the calcination temperature is too low, the primary particles are too small, which can also cause an excessively large contact interface between particles, inhibiting lithium ion conduction during charge-discharge cycling, and resulting in unsatisfactory electrochemical performance. Similarly, a length of calcination time also causes certain changes in the size of the primary particles. In addition, the particle size distribution of typical positive electrode materials is generally in a range of from 2 µm to 30 µm. However, during lithium ion de/intercalation, the main role of small-sized particles is to increase the overall tap density and shorten the lithium ion diffusion path, whereas the stability of lithium ion intercalation (i.e., the decisive factor affecting the final energy density and charge/discharge stability of the material) mainly comes from particles having a larger size and a greater population, i.e., particles with a particle diameter of 5-15 µm. Therefore, in the technical solution of the present disclosure, the product of the number of primary particles per unit area in the secondary particles with a particle diameter of 5-15 µm (i.e., the size of the primary particles in the secondary particles) and the Li/Ni mixed occupancy ratio of the material is used as a limiting parameter of the positive electrode material. When the product of these two parameters is in a range of from 20 to 50, the Li/Ni mixed occupancy ratio of the positive electrode material is in a suitable range (the Li/Ni mixed occupancy ratio does not show an obvious correlation with the preparation conditions upon analysis), and at the same time, during charge-discharge cycling, the positive electrode material does not suffer from low charge-discharge capacity or poor cycling stability due to the particle size of primary particles in the secondary particles. The positive electrode material can achieve desirable electrochemical performance. According to test results, the calcination conditions corresponding to the positive electrode materials within this range are not the same as the optimal calcination conditions determined by the conventional research theories based on the Li/Ni mixed occupancy ratio and the primary particle size change of the positive electrode material.

For convenience of description and explanation, A×B is hereinafter referred to as PPD (primary particle distribution) in the present disclosure. Those skilled in the art should understand that the definition of PPD does not lead to different interpretations or understandings of parameter A, parameter B, or their product.

It should be noted that the mixed occupancy ratio of lithium atoms to nickel atoms in the positive electrode material of the present disclosure can be obtained by the following method: performing XRD characterization on the positive electrode material powder to obtain an XRD pattern, and then using conventional software such as TOPAS (Coelho Software), GSAS, Fullproof, etc., to perform refinement and fitting on the XRD pattern of the positive electrode material powder to obtain the relevant values (refinement accuracy parameters R_{wp} and Rₚ are less than 10%).

The method for determining the average number of primary particles per square micron in a cross-section of secondary particles with a particle diameter of 5-15 µm in the positive electrode material of the present disclosure can be the following method.

A sample of the positive electrode material including secondary particles with a particle diameter of 5-15 µm is taken. The sample is then sectioned, for example, using a focused ion beam (FIB) or an ion beam cross-section polisher (CP) (argon ion cross-section polishing). The cross-section of the sectioned sample is then subjected to SEM analysis, and an SEM image of the cross-section of the sample is thereby obtained.

In SEM image of the cross-section of the sample, image analysis software such as Dragonfly (Object Research System) or Avizo (Thermo Fisher Scientific Inc.) is used to count the number of primary particles and to measure the area of each primary particle. Alternatively, manual calculation of particle area and counts can also be performed. The number of primary particles per square micron = total number of all primary particles / a sum of areas of all primary particles.

Meanwhile, the sum of areas of all primary particles can be directly measured by the software, or it can be obtained by first measuring the cross-sectional area of the sample and the gap area between primary particles in the cross-section of the sample, and then subtracting the gap area from the cross-sectional area of the sample. However, when it is obtained by subtracting, it must be ensured that the gap area accounts for less than 1% of the cross-sectional area of the sample; otherwise, a large error will be introduced, and the final calculation accuracy will be lowered.

In the present disclosure, the number of the secondary particles in a sample is at least 30, and the calculated data is a statistical average value of the corresponding batch of samples.

Preferably, the mixed occupancy ratio of lithium atoms to nickel atoms in the positive electrode material is in a range of from 1.2 to 5.

More preferably, the mixed occupancy ratio of lithium atoms to nickel atoms in the positive electrode material is in a range of from 1.5 to 4.2.

More preferably, the mixed occupancy ratio of lithium atoms to nickel atoms in the positive electrode material is any one of 1.5, 1.6, 1.7, 1.8, 2, 2.2, 2.4, 2.6, 2.8, 3, 3.2, 3.4, 3.6, 3.7, 3.8, 3.9, 4, 4.1, or 4.2, or a range between any two thereof.

General known theory holds that as the calcination temperature increases, the overall trend of the Li/Ni mixed occupancy ratio of the material first increases and then decreases. However, depending on doping elements in the positive electrode material, especially the nickel element, the range of the mixed occupancy ratio of lithium atoms to nickel atoms also varies with the change in calcination temperature during positive electrode material preparation. The inventors have found that the positive electrode material has better performance when the mixed occupancy ratio of lithium atoms to nickel atoms is in a range of from 1.5 to 4.2.

Preferably, the average number of primary particles per square micron in a cross-section of secondary particles with a particle diameter of 5-15 µm in the positive electrode material is in a range of from 4 to 25.

More preferably, the average number of primary particles per square micron in a cross-section of secondary particles with a particle diameter of 5-15 µm in the positive electrode material is in a range of from 6 to 19.

More preferably, the average number of primary particles per square micron in a cross-section of secondary particles with a particle diameter of 5-15 µm in the positive electrode material is any one of 6, 7, 8, 9, 10, 11, 12, 14, 16, 17, 18, or 19, or a range between any two thereof.

Generally speaking, the fewer the number of primary particles per unit area in the cross-section of secondary particles, the larger the size of the primary particles in the secondary particles. Under normal circumstances, the volume expansion and contraction of primary particles during charge and discharge is about 2-4%. The inventors have found that when the average number of primary particles per square micron in a cross-section of secondary particles with a particle diameter of 5-15 µm in the positive electrode material is in the above range, most of the primary particles in the positive electrode material are not too small, and they are generally not crushed by mutual extrusion during charge and discharge, resulting in better electrochemical performance.

Preferably, a value of A×B satisfies: 25 ≤ A×B ≤ 40.

The inventors have verified that when the PPD of the positive electrode material is within this preferred range, the positive electrode material can possess both a better discharge specific capacity and cycling stability.

Preferably, the positive electrode material includes LiNiₓM₁₋ₓO₂ or LiNi_{y}Co_{z}M'_{1-y-z}O₂;
where M is any one selected from the group consisting of Co, Mn, and Mg, and 0.7 ≤ x ≤ 0.98;
where M' is any one selected from the group consisting of Mn, Mg, and Al, 0.7 ≤ y ≤ 0.98, 0.05 ≤ z ≤ 0.3, and y+z < 1.

More preferably, the positive electrode material further includes a doping element, and the doping element is at least one selected from the group consisting of niobium, tungsten, molybdenum, tantalum, titanium, zirconium, boron, aluminum, and magnesium.

Preferably, the positive electrode material is LiNi_{0.9}M_{0.1}O₂; the mixed occupancy ratio of lithium atoms to nickel atoms in the positive electrode material is in a range of from 2.2 to 3.7, and the average number of primary particles per square micron in a cross-section of secondary particles with a particle diameter of 5-15 µm in the positive electrode material is in a range of from 5 to 18.

Preferably, the positive electrode material is LiNi_{0.95}M_{0.05}O₂; the mixed occupancy ratio of lithium atoms to nickel atoms in the positive electrode material is in a range of from 3 to 4.5, and the average number of primary particles per square micron in a cross-section of secondary particles with a particle diameter of 5-15 µm in the positive electrode material is in a range of from 4 to 14.

Preferably, the positive electrode material is LiNi_{0.98}M_{0.02}O₂; the mixed occupancy ratio of lithium atoms to nickel atoms in the positive electrode material is in a range of from 2 to 3.6, and the average number of primary particles per square micron in a cross-section of secondary particles with a particle diameter of 5-15 µm in the positive electrode material is in a range of from 9 to 17.

Preferably, the positive electrode material is LiNi_{0.8}Co_{0.1}M'_{0.1}O₂; the mixed occupancy ratio of lithium atoms to nickel atoms in the positive electrode material is in a range of from 1.5 to 2.2, and the average number of primary particles per square micron in a cross-section of secondary particles with a particle diameter of 5-15 µm in the positive electrode material is in a range of from 14 to 24.

Preferably, the positive electrode material is LiNi_{0.9}Co_{0.05}M'_{0.05}O₂; the mixed occupancy ratio of lithium atoms to nickel atoms in the positive electrode material is in a range of from 1.5 to 2.3, and the average number of primary particles per square micron in a cross-section of secondary particles with a particle diameter of 5-15 µm in the positive electrode material is in a range of from 12 to 22.

Preferably, the positive electrode material is LiNi_{0.95}Co_{0.025}M'_{0.025}O₂; the mixed occupancy ratio of lithium atoms to nickel atoms in the positive electrode material is in a range of from 2 to 2.6, and the average number of primary particles per square micron in a cross-section of secondary particles with a particle diameter of 5-15 µm in the positive electrode material is in a range of from 12 to 22.

Preferably, the positive electrode material includes LiNiₓM₁₋ₓO₂ and niobium, 0.9 ≤ x ≤ 0.98; the mixed occupancy ratio of lithium atoms to nickel atoms in the positive electrode material is in a range of from 3 to 4.5, and the average number of primary particles per square micron in a cross-section of secondary particles with a particle diameter of 5-15 µm in the positive electrode material is in a range of from 6 to 15.

Preferably, the positive electrode material includes LiNi_{y}Co_{z}M'_{1-y-z}O₂ and niobium, 0.8 ≤ y ≤ 0.95; the mixed occupancy ratio of lithium atoms to nickel atoms in the positive electrode material is in a range of from 1.2 to 3.5, and the average number of primary particles per square micron in a cross-section of secondary particles with a particle diameter of 5-15 µm in the positive electrode material is in a range of from 11 to 22.

The chemical composition of the positive electrode material of the present disclosure can be similar to that of conventional positive electrode materials in the art, and additional doping elements can be introduced as needed to improve overall structural stability and expand lithium ion de/intercalation channels. However, compared with these undoped and doped conventional materials, during charge and discharge, the positive electrode material of the present disclosure does not suffer from electrochemical performance degradation due to crushing of primary particles in secondary particles by extrusion, nor does it suffer from low lithium ion transport rate due to excessively large inter-particle contact interfaces. Moreover, the positive electrode material does not exhibit lithium precipitation due to Li/Ni mixing. As long as the PPD is maintained within the specific range, the electrochemical activity and cycling stability can be ensured. For doped positive electrode materials, the electrochemical performance is even better (for example, niobium-doped positive electrode materials have improved electrochemical cycling stability).

Preferably, a mass percentage of particles with a diameter of 5-15 µm in the positive electrode material is ≥ 50%.

Preferably, a specific surface area of the positive electrode material is in a range of from 5 m²/g to 15 m²/g.

After controlling the particle size, specific surface area, and pore size of the positive electrode material, particle distribution are more uniform when the positive electrode material is prepared into a lithium electrode plate, and the contact effect with the electrolyte is better.

Another objective of the present disclosure is to provide a secondary battery, including a positive electrode plate, a separator, and a negative electrode plate; where the positive electrode plate includes the positive electrode material of the present disclosure.

When the positive electrode material of the present disclosure is used in a positive electrode plate of a secondary battery, as an active material, its particle distribution is ideal, no extrusion phenomenon occurs, and there is no excessively large inter-particle interface. The charge/discharge stability is high, and there is no significant increase in Li/Ni mixing, so the probability of lithium precipitation is low, and the electrochemical performance is excellent. Moreover, after being prepared into a positive electrode plate, PPD, the mixed occupancy ratio of lithium atoms to nickel atoms, and the average number of primary particles per square micron in a cross-section of secondary particles with a particle diameter of 5-15 µm of the positive electrode material do not change significantly. Those skilled in the art can make a relatively accurate prediction of the electrochemical performance of the secondary battery based on these properties.

It should be noted that the negative electrode plate and the separator in the secondary battery can be made of conventional materials in the art, and the preparation method of the secondary battery can be a conventional preparation method in the art.

A further objective of the present disclosure is to provide an electric device, including the secondary battery of the present disclosure, and the secondary battery serves as a power supply for the electric device.

Preferably, the electric device includes an automobile, an electric bicycle, a vessel, or a lighting device.

The present disclosure has the following beneficial effects. The present disclosure provides a high-nickel positive electrode material. By defining a product of a parameter A and a parameter B to be within a specific range, primary particles in secondary particles of the positive electrode material are not packed too closely together which would otherwise cause a risk of crushing by compression, and there is sufficient transport space for lithium ion de/intercalation. The secondary battery does not suffer from lithium precipitation due to Li/Ni mixing during charge and discharge, and thus has desirable charge/discharge activity and cycling stability.

### BRIEF DESCRIPTION OF DRAWINGS

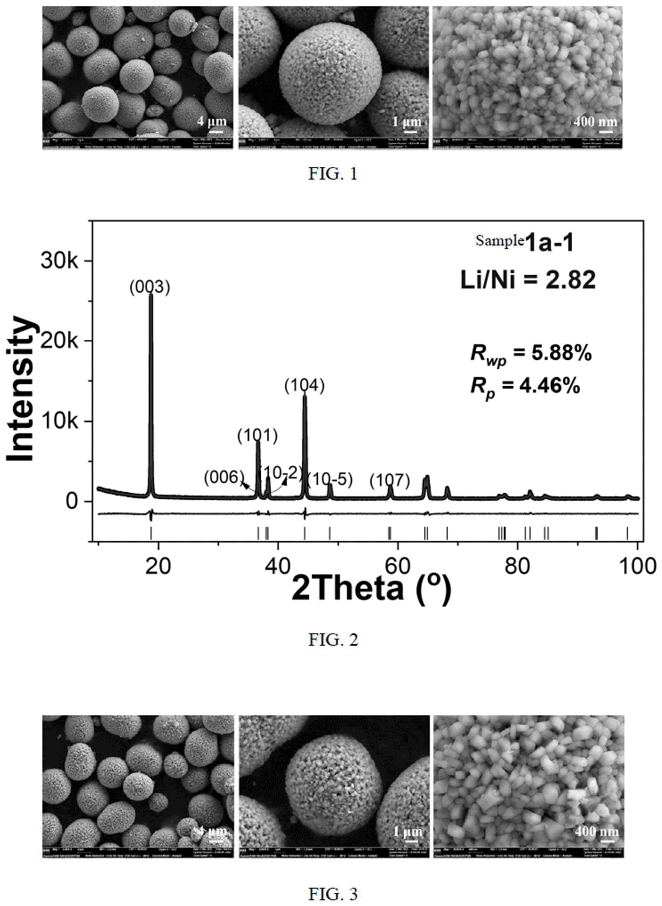

FIG. 1 shows a scanning electron microscope (SEM) image of an overall positive electrode material (left) obtained in Example 1a-1 of the present disclosure, an SEM image of secondary particles with a diameter of 5-15 µm in the material (middle), and an SEM image of primary particles in secondary particles with a diameter of 5-15 µm in the material (right).
FIG. 2 is a pattern showing the fitting and refinement results obtained by analysis software after XRD testing of the positive electrode material obtained in Example 1a-1 of the present disclosure.
FIG. 3 shows an SEM image of an overall positive electrode material (left) obtained in Example 1a-2 of the present disclosure, an SEM image of secondary particles with a diameter of 5-15 µm in the material (middle), and an SEM image of primary particles in secondary particles with a diameter of 5-15 µm in the material (right).

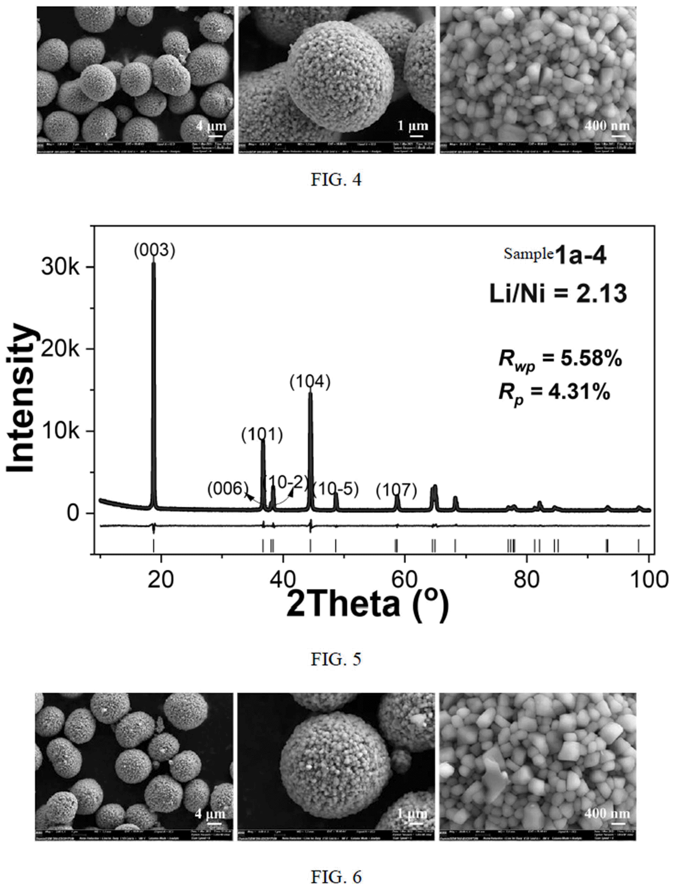

FIG. 4 shows an SEM image of the overall positive electrode material (left) obtained in Example 1a-4 of the present disclosure, an SEM image of secondary particles with a diameter of 5-15 µm in the material (middle), and an SEM image of primary particles in secondary particles with a diameter of 5-15 µm in the material (right).
FIG. 5 is a pattern showing the fitting and refinement results obtained by analysis software after XRD testing of the positive electrode material obtained in Example 1a-4 of the present disclosure.
FIG. 6 shows an SEM image of the overall positive electrode material (left) obtained in Example 1a-6 of the present disclosure, an SEM image of secondary particles with a diameter of 5-15 µm in the material (middle), and an SEM image of primary particles in secondary particles with a diameter of 5-15 µm in the material (right).

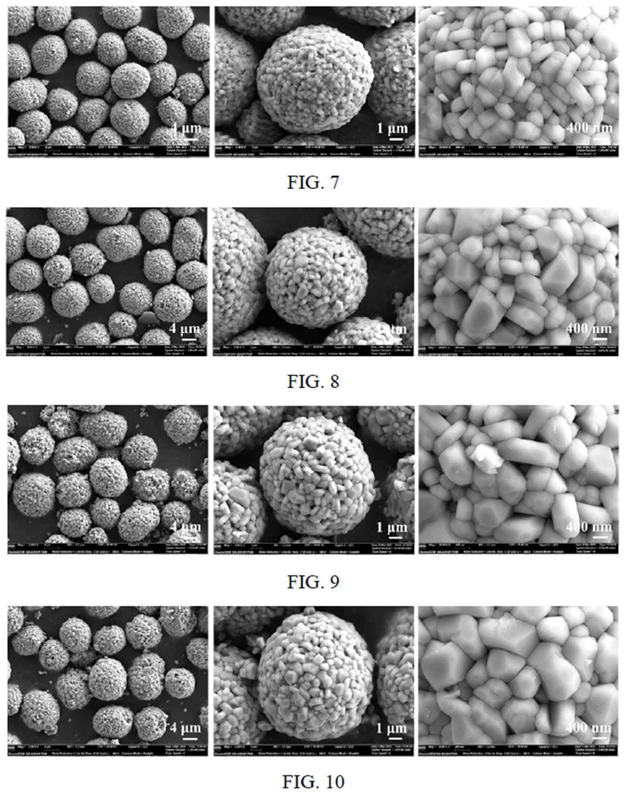

FIG. 7 shows an SEM image of the overall positive electrode material (left) obtained in Example 1a-7 of the present disclosure, an SEM image of secondary particles with a diameter of 5-15 µm in the material (middle), and an SEM image of primary particles in secondary particles with a diameter of 5-15 µm in the material (right).
FIG. 8 shows an SEM image of the overall positive electrode material (left) obtained in Example 1a-10 of the present disclosure, an SEM image of secondary particles with a diameter of 5-15 µm in the material (middle), and an SEM image of primary particles in secondary particles with a diameter of 5-15 µm in the material (right).
FIG. 9 shows an SEM image of the overall positive electrode material (left) obtained in Example 1a-12 of the present disclosure, an SEM image of secondary particles with a diameter of 5-15 µm in the material (middle), and an SEM image of primary particles in secondary particles with a diameter of 5-15 µm in the material (right).
FIG. 10 shows an SEM image of the overall positive electrode material (left) obtained in Example 1a-13 of the present disclosure, an SEM image of secondary particles with a diameter of 5-15 µm in the material (middle), and an SEM image of primary particles in secondary particles with a diameter of 5-15 µm in the material (right).

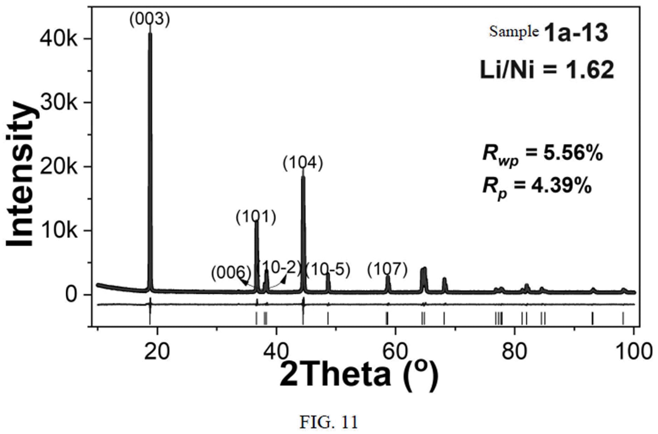

FIG. 11 is a pattern showing the fitting and refinement results obtained by analysis software after XRD testing of the positive electrode material obtained in Example 1a-13 of the present disclosure.

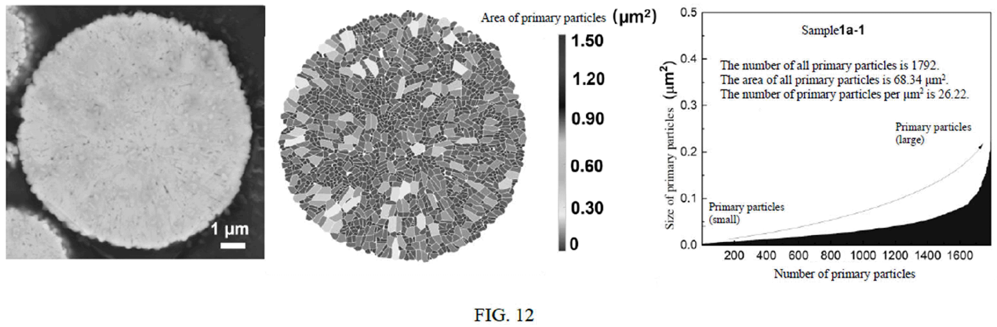

FIG. 12 shows an SEM image of secondary particles with a diameter of 5-15 µm in the positive electrode material obtained in Example 1a-1 (left), a cross-section fitting image of the particles after cutting (middle), and a primary particle distribution diagram obtained by software fitting (right).

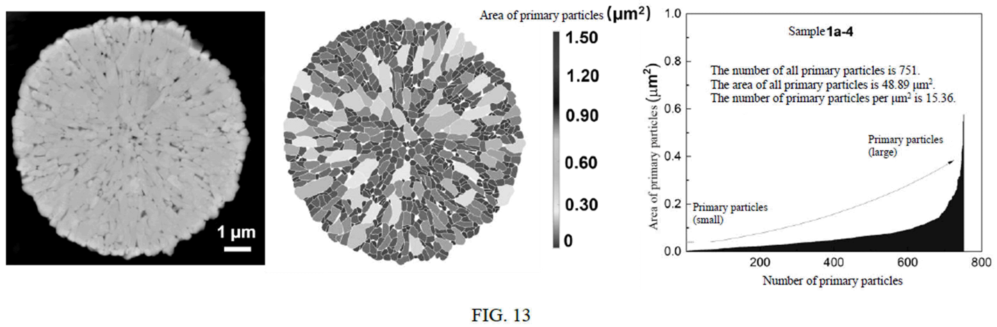

FIG. 13 shows an SEM image of secondary particles with a diameter of 5-15 µm in the positive electrode material obtained in Example 1a-4 (left), a cross-section fitting image of the particles after cutting (middle), and a primary particle distribution diagram obtained by software fitting (right).

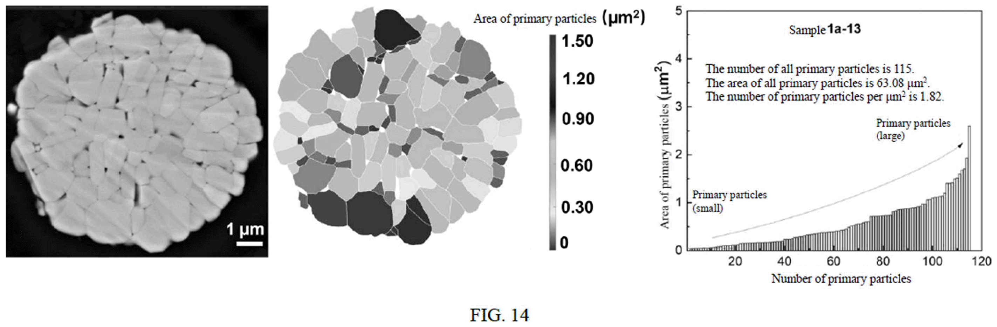

FIG. 14 shows an SEM image of secondary particles with a diameter of 5-15 µm in the positive electrode material obtained in Example 1a-13 (left), a cross-section fitting image of the particles after cutting (middle), and a primary particle distribution diagram obtained by software fitting (right).

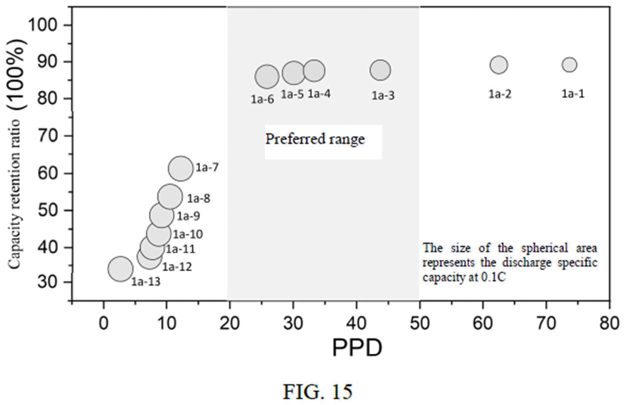

FIG. 15 is a ball-and-line diagram of data statistics after charge/discharge testing of the positive electrode material obtained in Example 1 of the present disclosure.

### DETAILED DESCRIPTION

To better illustrate the objective, technical solutions, and advantages of the present disclosure, the present disclosure will be further described below with reference to specific examples and comparative examples, which are provided to understand the content of the present disclosure in details, not to limit the present disclosure. All other embodiments obtained by persons of ordinary skill in the art without creative efforts are within the protection scope of the present disclosure. The experimental reagents, raw materials, and instruments used in the examples and comparative examples of the present disclosure are, unless otherwise specified, commonly used ordinary reagents, raw materials, and instruments.

It should be noted that the terms "include", "contain", "have", and any variations thereof in the description, claims, and the above drawings of the present disclosure are intended to cover non-exclusive inclusion. For example, a process, method, system, product, or device that includes a series of steps or units is not limited to the listed steps or units, but optionally further includes unlisted steps or units, or optionally further includes other steps or units inherent to these processes, methods, products, or devices. Terms such as "first" and "second" in the claims, description, and drawings of the present disclosure are used merely to distinguish one entity/operation/object from another entity/operation/object, and do not necessarily require or imply any such actual relationship or order between these entities/operations/objects.

In the present disclosure, technical features described in an open manner include both closed technical solutions consisting of the listed features and open technical solutions including the listed features.

In the present disclosure, when numerical ranges are involved, unless otherwise specified, the numerical ranges are considered continuous and include the minimum and maximum values of the range, as well as every value between the minimum and maximum values. Furthermore, when the range refers to integers, it includes every integer between the minimum and maximum values of the range. Moreover, when multiple ranges are provided to describe a feature or characteristic, the ranges can be combined. In other words, unless otherwise indicated, all ranges disclosed herein should be understood to include any and all sub-ranges subsumed therein.

The present disclosure provides a high-nickel positive electrode material, including a nickel element and a lithium element, where the positive electrode material includes primary particles and secondary particles formed by agglomeration of the primary particles, and the positive electrode material satisfies: 20 ≤ A×B ≤ 50,
where A is a mixed occupancy ratio of lithium atoms to nickel atoms in the positive electrode material, and B is an average number of primary particles per square micron in a cross-section of secondary particles with a particle diameter of 5-15 µm in the positive electrode material.

Specifically, a value of A×B may be one of 20, 25, 30, 35, 40, 45, or 50, or a range between any two thereof.

In a preferred embodiment, the mixed occupancy ratio of lithium atoms to nickel atoms in the positive electrode material is in a range of from 1.2 to 5.

Specifically, the mixed occupancy ratio of lithium atoms to nickel atoms in the positive electrode material may be one of 1.2, 1.5, 1.8, 2, 2.5, 3, 3.5, 4, 4.5, or 5, or a range between any two thereof.

In a preferred embodiment, the average number of primary particles per square micron in a cross-section of secondary particles with a particle diameter of 5-15 µm in the positive electrode material is in a range of from 4 to 25.

Specifically, the average number of primary particles per square micron in a cross-section of secondary particles with a particle diameter of 5-15 µm in the positive electrode material may be one of 4, 8, 10, 12, 15, 18, 20, 22, or 25 or a range between any two thereof.

In the examples, the values of A and B are each rounded to two decimal places, and a value of A×B is also rounded to two decimal places for statistical and calculation convenience. Those skilled in the art should understand that if other values or calculation methods are used, certain numerical deviations will inevitably occur, but such deviations are predictable to those skilled in the art and will not affect the reliability of the defined range of PPD in the present disclosure.

In a preferred embodiment, a mass percentage of particles with a diameter of 5-15 µm in the positive electrode material is ≥ 50%.

In a preferred embodiment, a specific surface area of the positive electrode material is in a range of from 5 m²/g to 15 m²/g.

One embodiment of the present disclosure provides a secondary battery, including a positive electrode plate, a separator, and a negative electrode plate, and the positive electrode plate includes the positive electrode material of the present disclosure.

One embodiment of the present disclosure provides an electric device, including the secondary battery of the present disclosure, and the secondary battery serves as a power supply for the electric device.

Specifically, in the embodiments of the present disclosure, the positive electrode material includes LiNiₓM₁₋ₓO₂ or LiNi_{y}Co_{z}M'_{1-y-z}O₂;
where M is any one selected from the group consisting of Co, Mn, and Mg, and 0.7 ≤ x ≤ 0.98;
where M' is any one selected from the group consisting of Mn, Mg, and Al, 0.7 ≤ y ≤ 0.98, 0.05 ≤ z ≤ 0.3, and y+z < 1.

Further preferably, in LiNiₓM₁₋ₓO₂, 0.9 ≤ x ≤ 0.98.

Further preferably, in LiNi_{y}Co_{z}M'_{1-y-z}O₂, 0.8 ≤ y ≤ 0.95.

Further preferably, in LiNi_{y}Co_{z}M'_{1-y-z}O₂, 0.9 ≤ y ≤ 0.95.

The positive electrode material is LiNi_{0.9}M_{0.1}O₂, LiNi_{0.95}M_{0.05}O₂, LiNi_{0.98}M_{0.02}O₂, LiNi_{0.8}Co_{z}N_{0.2-z}O₂, LiNi_{0.9}Co_{z}N_{0.1-z}O₂, or LiNi_{0.95}Co_{z}N_{0.05-z}O₂.

Further preferably, the positive electrode material further includes a doping element, and the doping element is at least one selected from the group consisting of niobium, tungsten, molybdenum, tantalum, titanium, zirconium, boron, aluminum, and magnesium.

Further preferably, the doping element is niobium.

In one embodiment, the positive electrode material is LiNi_{0.9}M_{0.1}O₂.

In one embodiment, the positive electrode material includes the doping element niobium and LiNi_{0.9}M_{0.1}O₂, and a doping amount of the doping element niobium is in a range of from 0.5 mol% to 5 mol%.

In one embodiment, the positive electrode material is LiNi_{0.95}M_{0.05}O₂.

In one embodiment, the positive electrode material includes the doping element niobium and LiNi_{0.95}M_{0.05}O₂, and a doping amount of the doping element niobium is in a range of from 0.5 mol% to 5 mol%.

In one embodiment, the positive electrode material is LiNi_{0.98}M_{0.02}O₂.

In one embodiment, the positive electrode material includes the doping element niobium and LiNi_{0.98}M_{0.02}O₂, and a doping amount of the doping element niobium is in a range of from 0.5 mol% to 5 mol%. Specifically, the doping amount of the doping element niobium may be one of 0.5%, 1%, 1.5%, 2%, 2.5%, 3%, 3.5%, 4%, 4.5%, or 5% or a range between any two thereof.

In one embodiment, the positive electrode material is LiNi_{0.8}Co_{0.1}M'_{0.1}O₂.

In one embodiment, the positive electrode material includes the doping element niobium and LiNi_{0.8}Co_{0.1}M'_{0.1}O₂, and a doping amount of the doping element niobium is in a range of from 0.5 mol% to 5 mol%.

In one embodiment, the positive electrode material is LiNi_{0.9}Co_{0.05}M'_{0.05}O₂.

In one embodiment, the positive electrode material includes the doping element niobium and LiNi_{0.9}Co_{0.05}M_{0.05}O₂, and a doping amount of the doping element niobium is in a range of from 0.5 mol% to 5 mol%.

In one embodiment, the positive electrode material is LiNi_{0.95}Co_{0.025}M'_{0.025}O₂.

In one embodiment, the positive electrode material includes the doping element niobium and LiNi_{0.95}Co_{0.025}M'_{0.025}O₂, and a doping amount of the doping element niobium is in a range of from 0.5 mol% to 5 mol%.

Specifically, the doping amount of the doping element niobium may be one of 0.5%, 1%, 1.5%, 2%, 2.5%, 3%, 3.5%, 4%, 4.5%, or 5%, or a range between any two thereof.

The specific surface areas of the positive electrode materials prepared in the examples were all in a range of from 5 m²/g to 15 m²/g.

The present disclosure is further described below with specific examples.

### Example 1

A positive electrode material was provided, and its preparation method included the following steps.
(1) NiSO₄·6H₂O, CoSO₄·H₂O, and MnSO₄·H₂O were weighed in a molar ratio of 9:0.5:0.5. They were respectively dissolved in deionized water to prepare 1.5-2.5 mol/L solutions. Meanwhile, a 3-5 mol/L NaOH solution and a 3-5 mol/L aqueous ammonia solution were also prepared.
(2) All the solutions prepared in step (1) were dropped into a reaction kettle via peristaltic pumps, and a coprecipitation reaction was carried out for 5-6 h. During the reaction, the pH of a mixed solution was precisely controlled at 11-12 by adjusting a flow rate of the NaOH solution, the reaction temperature was controlled by water-bath heating at 50 °C, the stirring rate was set at 800 rpm, and nitrogen protection was maintained. Then aging was conducted for 12 h, followed by washing and drying, to obtain coprecipitation precursor.
(3) The coprecipitation precursor and LiOH·H₂O were mixed in a molar ratio of 1:(1.06-1.1) and ground uniformly. Then, a resulting mixture was placed in a tube furnace under an oxygen atmosphere at atmospheric pressure (1 atm). In a first stage, the furnace was heated to 500 °C and held at this temperature for 4-6 h, and in a second stage, the furnace was heated to a temperature of X °C and held at this temperature for 14-16 h. After cooling, the positive electrode material LiNi_{0.9}Co_{0.05}Mn_{0.05}O₂ was obtained.

Herein, depending on the temperature of X °C in the second stage, parallel examples, Example 1a-1 to Example 1a-13, were set. In these examples, X°C was 700°C, 710°C, 720°C, 725°C, 730°C, 740°C, 750°C, 760°C, 770°C, 775°C, 780°C, 790°C, and 800°C, respectively.

The positive electrode materials prepared in Examples 1a-1 to 1a-13 were analyzed for the mixed occupancy ratio A of lithium atoms to nickel atoms: an XRD characterization was performed on the positive electrode material to obtain a pattern, then TOPAS XRD pattern analysis software was used to refine and fit the pattern to obtain the relevant values.

The positive electrode materials prepared in Examples 1a-1 to 1a-13 were analyzed for the average number B of primary particles per square micron in a cross-section of secondary particles with a particle diameter of 5-15 µm: a sample of the positive electrode material including 50 secondary particles with a diameter of 5-15 µm was taken, then the sample was subjected to focused ion beam sectioning, the cross-section of the sectioned sample was subjected to SEM to obtain an SEM image of the cross-section. In the SEM image of the cross-section, the image analysis recognition software Dragonfly was used to count the number of primary particles and the area of each primary particle, and finally the average area of the primary particle was calculated.

The obtained A and B of the positive electrode material of each example were used for calculation of a value of A×B, i.e., PPD.

The positive electrode materials prepared in Examples 1a-1 to 1a-13 were each used to prepare positive electrode plates for lithium-ion batteries in parallel. The preparation process was as follows: the positive electrode material, PVDF (polyvinylidene fluoride), and commercial conductive carbon black were mixed in a mass ratio of 8:1:1, and NMP (N-methylpyrrolidone) was used to make a slurry, followed by coating, drying, rolling, and punching, to obtain a positive electrode plate.

The positive electrode plate, a lithium metal plate, a commercial separator, and an electrolyte were used to assemble a lithium-ion coin cell, and the coin cell was subjected to electrochemical performance testing. The test voltage was 2.75-4.3 V, and the temperature was 45°C. First, the cell was cycled 3 times at 0.1C, with a nominal specific capacity of 180 mAh/g, and the initial discharge specific capacity was recorded. Then the rate was increased to 1C and the cell was cycled 200 times, and the capacity retention ratio after 200 cycles was calculated. The various test results were shown in Table 1a.

**Table 1a**

| Product | A | B | PPD | Initial discharge specific capacity at 0.1C (mAh/g) | Capacity retention rate after 200 cycles at 1C (%) |
|---|---|---|---|---|---|
| Example 1a-1 | 2.82 | 26.22 | 73.94 | 190.3 | 89.1 |
| Example 1a-2 | 2.50 | 24.98 | 62.45 | 194.3 | 88.6 |
| Example 1a-3 | 2.28 | 19.38 | 44.19 | 203.9 | 88.4 |
| Example 1a-4 | 2.13 | 15.36 | 32.72 | 210.8 | 88.2 |
| Example 1a-5 | 2.03 | 14.88 | 30.21 | 215.8 | 88.1 |
| Example 1a-6 | 1.98 | 12.84 | 25.42 | 220.7 | 86.8 |
| Example 1a-7 | 1.84 | 6.97 | 12.82 | 225.9 | 61.5 |
| Example 1a-8 | 1.74 | 6.24 | 10.86 | 230.9 | 54.8 |
| Example 1a-9 | 1.65 | 5.64 | 9.31 | 233.5 | 49.5 |
| Example 1a-10 | 1.62 | 5.51 | 8.93 | 235.2 | 44.8 |
| Example 1a-11 | 1.48 | 5.28 | 7.81 | 234.5 | 40.6 |
| Example 1a-12 | 1.59 | 4.84 | 7.70 | 231.3 | 38.5 |
| Example 1a-13 | 1.62 | 1.82 | 2.95 | 229.5 | 35.1 |

As can be seen from Table 1a, as the temperature in the second stage increases from 700°C to 800°C, while the chemical composition of the prepared positive electrode material remains essentially unchanged, the mixed occupancy ratio A of lithium atoms to nickel atoms gradually decreases, the size of the secondary particles with a particle diameter of 5-15 µm remains essentially unchanged, but the size of the primary particles in the secondary particles gradually increases, as shown in FIGS. 1-11. The average number B of primary particles per square micrometer gradually decreases, as shown in FIGS. 12-14. According to existing common theories, a smaller mixed occupancy ratio A of lithium atoms to nickel atoms should result in better electrochemical performance. However, among Examples 1a-1 to 1a-13, although the product of Example 1a-13, which has the smallest mixed occupancy ratio A of lithium atoms to nickel atoms, maintains an initial discharge specific capacity close to 230 mAh/g, the initial discharge specific capacity is not the highest among the products, and the capacity retention rate after 200 cycles at 1C is only 35.1%, which clearly does not conform to the teaching of the common theories. This is because, during charge and discharge, in addition to the mixed occupancy ratio of lithium atoms to nickel atoms, the particle size and particle distribution of the material also have a significant impact on the electrochemical activity of the positive electrode material. When the PPD of the positive electrode material is in a range of 20-50, the corresponding products of Examples 1a-3 to 1a-6 possess initial discharge specific capacities above 200 mAh/g. Most importantly, the capacity retention rate after 200 cycles of these products can reach above 86%, which is a great difference from Example 1a-7 (with a PPD less than 20). In particular, when the PPD is in a range of 25-40, the discharge specific capacity and cycling stability of the product are both at relatively high levels. Although the capacity retention rates of the products of Examples 1a-1 and 1a-2 are further improved compared to that of Examples 1a-3 to 1a-6, since both A and B are relatively large, the PPD exceeds 50, the lithium ion de/intercalation activity of the positive electrode material becomes poor, and the initial discharge specific capacity is below 200 mAh/g. The test results of Table 1a are plotted as a ball-and-line diagram in FIG. 15. As can be seen from FIG. 15 more intuitively, the performance trend of the positive electrode material of the present disclosure is different from the conventionally recognized processing technology and Li/Ni mixing laws.

Subsequently, the same coprecipitation precursor was prepared according to the above method. The coprecipitation precursor and LiOH·H₂O were mixed in a molar ratio of 1:(1.06-1.1) and ground uniformly. Then, a resulting mixture was placed in a high-pressure tube furnace under an oxygen atmosphere (50 atm), heated to 500°C and held at this temperature for 4-6 h in a first stage, then to a temperature and held at this temperature for a time in a second stage, and then cooled to obtain the positive electrode material LiNi_{0.9}Co_{0.05}Mn_{0.05}O₂.

Herein, parallel examples, Examples 1b-1 to 1b-6, were set. In these examples, the preparation process differed in the temperature and the time in the second stage, which were shown as follows: 700°C (4-6 h), 700°C (14-16 h), 725°C (14-16 h), 750°C (14-16 h), 775°C (14-16 h), 800°C (14-16 h).

The positive electrode materials were analyzed and tested according to the above method, and the results were shown in Table 1b.

**Table 1b**

| Product | A | B | PPD | Initial discharge specific capacity at 0.1C (mAh/g) | Capacity retention rate after 200 cycles at 1C (%) |
|---|---|---|---|---|---|
| Example 1b-1 | 3.12 | 25.28 | 78.87 | 210.3 | 93.1 |
| Example 1b-2 | 2.18 | 20.12 | 43.86 | 218.5 | 92.4 |
| Example 1b-3 | 1.92 | 18.12 | 34.79 | 220.7 | 91.8 |
| Example 1b-4 | 1.56 | 16.28 | 25.39 | 225.8 | 90.9 |
| Example 1b-5 | 1.32 | 14.26 | 18.82 | 232 | 80.9 |
| Example 1b-6 | 1.23 | 13.85 | 17.03 | 238.6 | 70.4 |

As can be seen from Table 1b, although the same raw materials were used for preparation, if the calcination conditions are adjusted, for example, using a high-pressure environment for calcination, the physical parameters of the obtained positive electrode materials are different under different conditions. Therefore, the optimal calcination temperature corresponding to the best electrochemical performance of the positive electrode material under a high-pressure is also different from that under atmospheric pressure. However, when the PPD of the product is within a range of 20-50, the product still achieves desirable discharge specific capacity and cycling stability.

### Example 2

A positive electrode material was provided, and its preparation method included the following steps.
(1) NiSO₄·6H₂O, CoSO₄·H₂O, and MnSO₄·H₂O were weighed in a molar ratio of 9.5:0.25:0.25. They were respectively dissolved in deionized water to prepare 1.5-2.5 mol/L solutions. Meanwhile, a 3-5 mol/L NaOH solution and a 3-5 mol/L aqueous ammonia solution were also prepared.
(2) All the solutions prepared in step (1) were dropped into a reaction kettle via peristaltic pumps, and a coprecipitation reaction was carried out. The pH of a mixed solution was precisely controlled at 11-12 by adjusting a flow rate of the NaOH solution. The reaction temperature was controlled by water-bath heating at 50 °C, the stirring rate was set at 800 rpm, and nitrogen protection was maintained. The reaction was continuously performed for 5-6 h. Subsequently, aging was conducted for 12 h, and after washing and drying were completed, a coprecipitation precursor was obtained.
(3) The coprecipitation precursor and LiOH·H₂O were mixed in a molar ratio of 1:(1.06-1.1) and were ground uniformly. Then, a resulting mixture was placed in a tube furnace under an oxygen atmosphere at atmospheric pressure (1 atm). In a first stage, the furnace was heated to 500 °C and held at this temperature for 4-6 h, and in a second stage, the furnace was heated to a temperature and held at this temperature for a time. After cooling, the positive electrode material LiNi_{0.95}Co_{0.025}Mn_{0.025}O₂ was obtained.

Herein, examples, Examples 2a-1 to 2a-7, were set in parallel. In these examples, the preparation process differed in the temperature and the time in the second stage, which were shown as follows: 700°C (14-16 h), 700°C (74-76 h), 700°C (149-151 h), 725°C (14-16 h), 750°C (14-16 h), 775°C (14-16 h), 800°C (14-16 h).

The positive electrode materials were analyzed and tested according to the method described in Example 1, with a nominal specific capacity of 180 mAh/g. The results were shown in Table 2a.

**Table 2a**

| Product | A | B | PPD | Initial discharge specific capacity at 0.1C (mAh/g) | Capacity retention rate after 200 cycles at 1C (%) |
|---|---|---|---|---|---|
| Example 2a-1 | 2.74 | 22.63 | 62.00 | 224.5 | 94.1 |
| Example 2a-2 | 2.35 | 19.79 | 46.50 | 230.3 | 91.4 |
| Example 2a-3 | 2.18 | 17.01 | 37.08 | 234.7 | 92.2 |
| Example 2a-4 | 2.01 | 12.14 | 24.40 | 238.5 | 90.3 |
| Example 2a-5 | 1.67 | 5.78 | 9.65 | 243.5 | 57.6 |
| Example 2a-6 | 1.52 | 4.27 | 6.49 | 240.4 | 31.3 |
| Example 2a-7 | 1.61 | 1.53 | 2.46 | 231.8 | 24.9 |

Subsequently, the same coprecipitation precursor was prepared according to the above method. The coprecipitation precursor and LiOH·H₂O were mixed in a molar ratio of 1:(1.06-1.1) and ground uniformly. Then, a resulting mixture was placed in a high-pressure tube furnace under an oxygen atmosphere (50 atm), heated to 500°C and held for 4-6 h in a first stage, then to a temperature and held at this temperature for a time in a second stage, and cooled to obtain the positive electrode material LiNi_{0.95}Co_{0.025}Mn_{0.025}O₂.

Herein, parallel examples, Examples 2b-1 to 2b-6, were set. In these examples, the preparation process differed in the temperature and the time in the second stage, which were shown as follows: 700°C (14-16 h), 725°C (14-16 h), 750°C (14-16 h), 775°C (14-16 h), 800°C (14-16 h), 850°C (14-16 h).

The positive electrode materials were analyzed and tested according to the above method, and the results were shown in Table 2b. It is evident from Tables 2a and 2b that, compared with the products of the above examples, when the doping amount changes, the discharge specific capacity and cycle capacity retention rate of the product change, but the relationship between the performance and the PPD of the product is similar to that of the products of Example 1.

**Table 2b**

| Product | A | B | PPD | Initial discharge specific capacity at 0.1C (mAh/g) | Capacity retention rate after 200 cycles at 1C (%) |
|---|---|---|---|---|---|
| Example 2b-1 | 3.34 | 31.61 | 105.57 | 213.4 | 95.7 |
| Example 2b-2 | 2.89 | 24.83 | 71.75 | 222.1 | 94.6 |
| Example 2b-3 | 2.51 | 19.36 | 48.59 | 228.7 | 93.7 |
| Example 2b-4 | 2.23 | 17.49 | 39.00 | 235.3 | 93.1 |
| Example 2b-5 | 2.07 | 15.74 | 32.58 | 239.6 | 92.4 |
| Example 2b-6 | 1.73 | 9.37 | 16.21 | 231.5 | 81.5 |

### Example 3

A positive electrode material was provided, and its preparation method included the following steps.
(1) NiSO₄·6H₂O and MnSO₄·H₂O were weighed in a molar ratio of 9:1. They were respectively dissolved in deionized water to prepare 1.5-2.5 mol/L solutions. Meanwhile, a 3-5 mol/L NaOH solution and a 3-5 mol/L aqueous ammonia solution were also prepared.
(2) All the solutions prepared in step (1) were dropped into a reaction kettle via peristaltic pumps, and a coprecipitation reaction was carried out. The pH of a mixed solution was precisely controlled at 8-10 by adjusting a flow rate of the NaOH solution. The reaction temperature was controlled by water-bath heating at 50 °C, the stirring rate was set at 800 rpm, and nitrogen protection was maintained. The reaction was continuously performed for 5-6 h. Subsequently, aging was conducted for 12 h, and after washing and drying were completed, a coprecipitation precursor was obtained.
(3) The coprecipitation precursor and Li₂CO₃ were mixed in a molar ratio of 1:(0.5-0.55) and were ground uniformly. Then, a resulting mixture was placed in a tube furnace under an oxygen atmosphere at atmospheric pressure (1 atm). In a first stage, the furnace was heated to 500 °C and held at this temperature for 4-6 h, and in a second stage, the furnace was heated to a temperature and held at this temperature for a time. After cooling, the positive electrode material LiNi_{0.9}Mn_{0.1}O₂ was obtained.

Herein, parallel examples, Examples 3-1 to 3-6, were set. In these examples, the preparation process differed only in the temperature and the time in the second stage, which were shown as follows: 725°C (14-16 h), 750°C (14-16 h), 750°C (74-76 h), 775°C (14-16 h), 800°C (14-16 h), 825°C (14-16 h).

The positive electrode materials were analyzed and tested according to the method described in Example 1, with a nominal specific capacity of 180 mAh/g. The results were shown in Table 3. Unlike Examples 1 and 2, the products prepared in this example are binary materials, but similar to Examples 1 and 2, only when the PPD is maintained within the range of 20-50 can the product achieve both a relatively high discharge specific capacity and a relatively high cycle capacity retention rate.

**Table 3**

| Product | A | B | PPD | Initial discharge specific capacity at 0.1C (mAh/g) | Capacity retention rate after 200 cycles at 1C (%) |
|---|---|---|---|---|---|
| Example 3-1 | 5.69 | 23.37 | 132.97 | 200.2 | 88.5 |
| Example 3-2 | 4.52 | 18.59 | 84.02 | 202.4 | 87.1 |
| Example 3-3 | 2.22 | 16.8 | 37.29 | 216.1 | 86.3 |
| Example 3-4 | 3.33 | 9.53 | 31.73 | 215.3 | 85.3 |
| Example 3-5 | 3.7 | 5.58 | 20.64 | 219.4 | 84.7 |
| Example 3-6 | 3.62 | 2.33 | 8.43 | 212.2 | 70.3 |

### Example 4

A positive electrode material was provided, and its preparation method included the following steps.
(1) NiSO₄·6H₂O and MnSO₄·H₂O were weighed in a molar ratio of 9.5:0.5. They were respectively dissolved in deionized water to prepare 1.5-2.5 mol/L solutions. Meanwhile, a 3-5 mol/L NaOH solution and a 4 mol/L aqueous ammonia solution were also prepared.
(2) All the solutions prepared in step (1) were dropped into a reaction kettle via peristaltic pumps, and a coprecipitation reaction was carried out. The pH of a mixed solution was precisely controlled at 8-10 by adjusting a flow rate of the NaOH solution. The reaction temperature was controlled by water-bath heating at 50 °C, the stirring rate was set at 800 rpm, and nitrogen protection was maintained. The reaction was continuously performed for 5-6 h. Subsequently, aging was conducted for 12 h, and after washing and drying were completed, a coprecipitation precursor was obtained.
(3) The coprecipitation precursor and Li₂CO₃ were mixed in a molar ratio of 1:(0.5-0.55) and were ground uniformly. Then, a resulting mixture was placed in a tube furnace under an oxygen atmosphere at atmospheric pressure (1 atm). In a first stage, the furnace was heated to 500 °C and held at this temperature for 4-6 h, and in a second stage, the furnace was heated to a temperature and held at this temperature for a time. After cooling, the positive electrode material LiNi_{0.95}Mn_{0.05}O₂ was obtained.

Herein, parallel examples, Examples 4a-1 to 4a-7, were set. In these examples, the preparation process differed only in the temperature and the time in the second stage, which were shown as follows: 700°C (14-16 h), 725°C (14-16 h), 750°C (14-16 h), 750°C (74-76 h), 775°C (14-16 h), 800°C (14-16 h), 825°C (14-16 h).

The positive electrode materials were analyzed and tested according to the method described in Example 1, with a nominal specific capacity of 180 mAh/g. The results were shown in Table 4a.

**Table 4a**

| Product | A | B | PPD | Initial discharge specific capacity at 0.1C (mAh/g) | Capacity retention rate after 200 cycles at 1C (%) |
|---|---|---|---|---|---|
| Example 4a-1 | 6.75 | 27.62 | 186.43 | 193.2 | 86.9 |
| Example 4a-2 | 5.83 | 22.37 | 130.41 | 203.2 | 84.5 |
| Example 4a-3 | 3.61 | 13.59 | 49.05 | 216.4 | 83.7 |
| Example 4a-4 | 3.12 | 8.29 | 25.86 | 218 | 81.7 |
| Example 4a-5 | 3.22 | 6.43 | 20.70 | 226.3 | 78.3 |
| Example 4a-6 | 3.57 | 3.58 | 12.78 | 223.4 | 56.7 |
| Example 4a-7 | 3.62 | 1.93 | 6.98 | 219.2 | 34.3 |

Subsequently, the same coprecipitation precursor was prepared according to the above method. The coprecipitation precursor and Li₂CO₃ were mixed in a molar ratio of 1:(0.5-0.55) and ground uniformly. Then, it was placed in a high-pressure tube furnace under an oxygen atmosphere (50 atm), heated to 500°C and held at this temperature for 4-6 h in the first stage, then to a temperature and held at this temperature for a time in a second stage, and cooled to obtain the positive electrode material LiNi_{0.95}Mn_{0.05}O₂.

Herein, parallel examples, Examples 4b-1 to 4b-8, were set. In these examples, the preparation process differed only in the temperature and the time in the second stage, which were shown as follows: 700°C (14-16 h), 725°C (14-16 h), 750°C (14-16 h), 750°C (74-76 h), 775°C (14-16 h), 800°C (14-16 h), 825°C (14-16 h), 850°C (14-16 h).

The positive electrode materials were analyzed and tested according to the method described in Example 1, and the results were shown in Table 4b.

**Table 4b**

| Product | A | B | PPD | Initial discharge specific capacity at 0.1C (mAh/g) | Capacity retention rate after 200 cycles at 1C (%) |
|---|---|---|---|---|---|
| Example 4b-1 | 7.68 | 34.62 | 265.88 | 189.2 | 89.1 |
| Example 4b-2 | 6.73 | 30.37 | 204.39 | 195.6 | 88.5 |
| Example 4b-3 | 4.89 | 24.59 | 120.24 | 201.4 | 87.7 |
| Example 4b-4 | 3.62 | 16.43 | 59.47 | 207.3 | 86.3 |
| Example 4b-5 | 3.35 | 12.48 | 45.15 | 216.1 | 84.2 |
| Example 4b-6 | 4.37 | 9.58 | 41.86 | 213.7 | 85.7 |
| Example 4b-7 | 4.48 | 4.93 | 22.08 | 216.2 | 85.3 |
| Example 4b-8 | 5.03 | 2.65 | 13.32 | 211.3 | 69.4 |

As can be seen from Tables 4a and 4b, when the composition of the positive electrode materials is different from that of Example 1, as the calcination temperature increases and the pressure changes, the mixed occupancy ratio A of lithium atoms to nickel atoms and the average number B of primary particles per square micron in a cross-section of secondary particles with a diameter of 5-15 µm also have different initial values and ranges of variation. However, only when the PPD is in the range of 20-50 can the obtained positive electrode material achieve both a desirable discharge specific capacity and cycling stability.

### Example 5

A positive electrode material was provided, and its preparation method included the following steps.
(1) NiSO₄·6H₂O and MnSO₄·H₂O were weighed in a molar ratio of 9.8:0.2. They were respectively dissolved in deionized water to prepare 1.5-2.5 mol/L solutions. Meanwhile, a 3-5 mol/L NaOH solution and a 3-5 mol/L aqueous ammonia solution were also prepared.
(2) All the solutions prepared in step (1) were dropped into a reaction kettle via peristaltic pumps, and a coprecipitation reaction was carried out. The pH of a mixed solution was precisely controlled at 8-10 by adjusting a flow rate of the NaOH solution. The reaction temperature was controlled by water-bath heating at 50 °C, the stirring rate was set at 800 rpm, and nitrogen protection was maintained. The reaction was continuously performed for 6 h. Subsequently, aging was conducted for 12 h, and after washing and drying were completed, a coprecipitation precursor was obtained.
(3) The coprecipitation precursor and Li₂CO₃ were mixed in a molar ratio of 1:(0.5-0.55) and were ground uniformly. Then, a mixture was placed in a tube furnace under an oxygen atmosphere at atmospheric pressure (1 atm). In a first stage, the furnace was heated to 500 °C and held at this temperature for 4-6 h, and in a second stage, the furnace was heated to a temperature and held at this temperature for a time. After cooling, the positive electrode material LiNi_{0.98}Mn_{0.02}O₂ was obtained. Herein, parallel examples, Examples 5a-1 to 5a-7, were set. In these examples, the preparation process differed only in the temperature and the time in the second stage, which were shown as follows: 700°C (14-16 h), 725°C (14-16 h), 750°C (14-16 h), 750°C (74-76 h), 750°C (149-151 h), 775°C (14-16 h), 800°C (14-16 h).

The positive electrode materials were analyzed and tested according to the method described in Example 1, with a nominal specific capacity of 180 mAh/g. The results were shown in Table 5a.

**Table 5a**

| Product | A | B | PPD | Initial discharge specific capacity at 0.1C (mAh/g) | Capacity retention rate after 200 cycles at 1C (%) |
|---|---|---|---|---|---|
| Example 5a-1 | 6.15 | 26.72 | 164.32 | 197.8 | 84.1 |
| Example 5a-2 | 4.68 | 20.38 | 95.37 | 215.4 | 83.7 |
| Example 5a-3 | 3.53 | 12.44 | 43.91 | 228.9 | 83.5 |
| Example 5a-4 | 3.05 | 10.87 | 33.15 | 230.8 | 83.1 |
| Example 5a-5 | 2.64 | 9.12 | 24.07 | 231.4 | 82.9 |
| Example 5a-6 | 2.74 | 6.45 | 17.67 | 231.1 | 68.3 |
| Example 5a-7 | 3.31 | 2.34 | 7.74 | 225.7 | 39.5 |

Subsequently, the same coprecipitation precursor was prepared according to the above method. The coprecipitation precursor and Li₂CO₃ were mixed in a molar ratio of 1:(0.5-0.55) and ground uniformly. Then, a resulting mixture was placed in a high-pressure tube furnace under an oxygen atmosphere (50 atm), heated to 500°C and held at this temperature for 4-6 h in a first stage, then heated to a temperature and held at this temperature for a time in a second stage, and cooled to obtain the positive electrode material LiNi_{0.98}Mn_{0.02}O₂.

Herein, parallel examples, Examples 5b-1 to 5b-8, were set. In these examples, the preparation process differed only in the temperature and the time in the second stage, which were shown as follows: 700°C (14-16 h), 725°C (14-16 h), 750°C (14-16 h), 775°C (14-16 h), 775°C (74-76 h), 800°C (14-16 h), 825°C (14-16 h), 800°C (14-16 h).

The positive electrode materials were analyzed and tested according to the method described in Example 1, and the results were shown in Table 5b.

**Table 5b**

| Product | A | B | PPD | Initial discharge specific capacity at 0.1C (mAh/g) | Capacity retention rate after 200 cycles at 1C (%) |
|---|---|---|---|---|---|
| Example 5b-1 | 7.35 | 32.72 | 240.49 | 193.8 | 88.1 |
| Example 5b-2 | 5.28 | 29.78 | 157.23 | 210.4 | 87.7 |
| Example 5b-3 | 4.64 | 24.43 | 113.35 | 213.9 | 86.5 |
| Example 5b-4 | 3.81 | 20.57 | 78.37 | 215.1 | 86.2 |
| Example 5b-5 | 3.02 | 16.75 | 50.58 | 224.6 | 86.1 |
| Example 5b-6 | 2.31 | 14.34 | 33.12 | 225.7 | 85.5 |
| Example 5b-7 | 2.78 | 9.55 | 26.54 | 224.7 | 84.1 |
| Example 5b-8 | 3.70 | 2.63 | 9.73 | 220.5 | 68.4 |

### Example 6

A positive electrode material was provided, and its preparation method included the following steps.
(1) NiSO₄·6H₂O, CoSO₄·H₂O, and MnSO₄·H₂O were weighed in a molar ratio of 9:0.5:0.5. They were respectively dissolved in deionized water to prepare 1.5-2.5 mol/L solutions. Meanwhile, a 3-5 mol/L NaOH solution and a 3-5 mol/L aqueous ammonia solution were also prepared.
(2) All the solutions prepared in step (1) were dropped into a reaction kettle via peristaltic pumps, and a coprecipitation reaction was carried out. The pH of a mixed solution was precisely controlled at 11-12 by adjusting a flow rate of the NaOH solution. The reaction temperature was controlled by water-bath heating at 50 °C, the stirring rate was set at 800 rpm, and nitrogen protection was maintained. The reaction was continuously performed for 5-6 h. Subsequently, aging was conducted for 12 h, and after washing and drying were completed, a coprecipitation precursor was obtained.
(3) The coprecipitation precursor and LiOH·H₂O were mixed in a molar ratio of 1:(1.06-1.1), then niobium pentoxide was added and a resulting mixture was ground uniformly. Then, the mixture was placed in a tube furnace under an oxygen atmosphere at atmospheric pressure (1 atm). In a first stage, the furnace was heated to 500 °C and held at this temperature for 4-6 h, and in a second stage, the furnace was heated to a temperature and held at this temperature for a time. After cooling, the niobium-doped positive electrode material LiNi_{0.9}Co_{0.05}Mn_{0.05}O₂ was obtained, where a doping amount of niobium in the niobium-doped positive electrode material was 0.5 mol%.

Herein, parallel examples, Examples 6-1 to 6-8, were set. The difference between these examples was only the temperature and the time in the second stage, which were shown as follows: 700°C (14-16 h), 725°C (14-16 h), 750°C (14-16 h), 725°C (49-51 h), 725°C (74-76 h), 725°C (149-151 h), 775°C (14-16 h), 800°C (14-16 h).

The niobium-doped positive electrode materials were analyzed and tested according to the method described in Example 1, with a nominal specific capacity of 180 mAh/g. The results were shown in Table 6.

**Table 6**

| Product | A | B | PPD | Initial discharge specific capacity at 0.1C (mAh/g) | Capacity retention rate after 200 cycles at 1C (%) |
|---|---|---|---|---|---|
| Example 6-1 | 4.61 | 28.22 | 130.09 | 185.3 | 99.1 |
| Example 6-2 | 3.37 | 26.36 | 88.83 | 194.8 | 98.2 |
| Example 6-3 | 2.51 | 23.97 | 60.16 | 202.9 | 98.5 |
| Example 6-4 | 2.05 | 20.81 | 42.66 | 208.8 | 97.6 |
| Example 6-5 | 1.76 | 18.45 | 32.47 | 213.5 | 98.1 |
| Example 6-6 | 1.36 | 16.45 | 22.37 | 215.5 | 97.1 |
| Example 6-7 | 1.55 | 10.51 | 16.29 | 226.2 | 74.8 |
| Example 6-8 | 1.74 | 7.82 | 13.61 | 229.5 | 35.1 |

As can be seen in this example, the changes in parameter A and parameter B are not positively correlated with the holding temperature. When the temperature in the second stage is maintained at 725°C, as the holding time increases, the values of parameter A and parameter B may be higher than those at 750°C. Also, as can be seen from Table 6, the positive electrode material of the present disclosure may further contain a doping element, such as the doping element niobium in this example, which can effectively penetrate into the crystal lattice of the material and can exert a certain influence on various physical properties of the material. However, in all parallel examples, only products with PPD within the range defined by the present disclosure can achieve desirable electrochemical performance. Due to the doping of niobium, the products satisfying the definition of the present disclosure can still maintain a considerable discharge specific capacity even after further long-term cycling. For example, the product of Example 6-5 still possesses a cycle capacity retention rate of 95% after being cycled for 500 cycles.

### Example 7

A positive electrode material was provided, and its preparation method included the following steps.
(1) NiSO₄·6H₂O, CoSO₄·H₂O, and MnSO₄·H₂O were weighed in a molar ratio of 9:0.5:0.5. They were respectively dissolved in deionized water to prepare 1.5-2.5 mol/L solutions. Meanwhile, a 3-5 mol/L NaOH solution and a 3-5 mol/L aqueous ammonia solution were also prepared.
(2) All the solutions prepared in step (1) were dropped into a reaction kettle a peristaltic pump, and a coprecipitation reaction was carried out. The pH of a mixed solution was precisely controlled at 11-12 by adjusting a flow rate of the NaOH solution. The reaction temperature was controlled by water-bath heating at 50 °C, the stirring rate was set at 800 rpm, and nitrogen protection was maintained. The reaction was continuously performed for 5-6 h. Subsequently, aging was conducted for 12 h, and after washing and drying were completed, a coprecipitation precursor was obtained.
(3) The coprecipitation precursor and LiOH·H₂O were mixed in a molar ratio of 1:(1.06-1.1), then niobium pentoxide was added and a resulting mixture was ground uniformly. Then, the mixture was placed in a tube furnace under an oxygen atmosphere at atmospheric pressure (1 atm). In a first stage, the furnace was heated to 500 °C and held at this temperature for 4-6 h, and in a second stage, the furnace was heated to a temperature and held at this temperature for a time. After cooling, the niobium-doped positive electrode material LiNi_{0.9}Co_{0.05}Mn_{0.05}O₂ was obtained, where a doping amount of niobium in the niobium-doped positive electrode material was 1 mol%.

Herein, depending on the conditions in the second stage, parallel examples, Examples 7-1 to 7-8, were set. In these examples, the temperature and the time in the second stage were respectively: 700°C (14-16 h), 725°C (14-16 h), 750°C (14-16 h), 750°C (49-51 h), 750°C (74-76 h), 750°C (149-151 h), 775°C (14-16 h), 800°C (14-16 h).

The niobium-doped positive electrode materials were analyzed and tested according to the method described in Example 1, with a nominal specific capacity of 180 mAh/g. The results were shown in Table 7.

**Table 7**

| Product | A | B | PPD | Initial discharge specific capacity at 0.1C (mAh/g) | Capacity retention rate after 200 cycles at 1C (%) |
|---|---|---|---|---|---|
| Example 7-1 | 6.33 | 30.22 | 191.29 | 180.3 | 99.1 |
| Example 7-2 | 4.33 | 28.36 | 122.79 | 200.3 | 98.2 |
| Example 7-3 | 3.16 | 25.97 | 82.06 | 205.9 | 98.5 |
| Example 7-4 | 2.35 | 20.17 | 47.40 | 210.8 | 98.6 |
| Example 7-5 | 2.05 | 18.64 | 38.21 | 215.1 | 98.1 |
| Example 7-6 | 1.97 | 14.85 | 29.25 | 220.7 | 96.5 |
| Example 7-7 | 1.76 | 10.31 | 18.15 | 225.2 | 47.8 |
| Example 7-8 | 1.79 | 7.92 | 14.18 | 227.5 | 38.1 |

Comparing the products of Example 6 and Example 7, it can be seen that as the doping amount of the doping element increases, the mixed occupancy ratio A of lithium atoms to nickel atoms and the average number B of primary particles per square micron in a cross-section of secondary particles with a diameter of 5-15 µm after calcination at the same temperature are quite different. This indicates that the physical parameters of the positive electrode material are also influenced by the doping amount of the doping element, and the calcination conditions corresponding to the PPD falling within the defined range are also different.

### Example 8

A positive electrode material was provided, and its preparation method included the following steps.
(1) NiSO₄·6H₂O, CoSO₄·H₂O, and MnSO₄·H₂O were weighed in a molar ratio of 9.5:0.25:0.25. They were respectively dissolved in deionized water to prepare 1.5-2.5 mol/L solutions. Meanwhile, a 3-5 mol/L NaOH solution and a 3-5 mol/L aqueous ammonia solution were also prepared.
(2) All the solutions prepared in step (1) were dropped into a reaction kettle via peristaltic pumps, and a coprecipitation reaction was carried out. The pH of a mixed solution was precisely controlled at 11-12 by adjusting a flow rate of the NaOH solution. The reaction temperature was controlled by water-bath heating at 50 °C, the stirring rate was set at 800 rpm, and nitrogen protection was maintained. The reaction was continuously performed for 5-6 h. Subsequently, aging was conducted for 12 h, and after washing and drying were completed, a coprecipitation precursor was obtained.
(3) The coprecipitation precursor and LiOH·H₂O were mixed in a molar ratio of 1:(1.06-1.1), then niobium pentoxide was added and a resulting mixture was ground uniformly. Then, the mixture was placed in a tube furnace under an oxygen atmosphere at atmospheric pressure (1 atm). In a first stage, the furnace was heated to 500 °C and held at this temperature for 4-6 h, and in a second stage, the furnace was heated to a temperature and held at this temperature for a time. After cooling, the niobium-doped positive electrode material LiNi_{0.95}Co_{0.025}Mn_{0.025}O₂ was obtained, where a doping amount of niobium in the niobium-doped positive electrode material was 0.5 mol%.

Herein, depending on the conditions in the second stage, parallel examples, Examples 8-1 to 8-7, were set. In these examples, the temperature and the time in the second stage were respectively: 700°C (14-16 h), 725°C (14-16 h), 750°C (14-16 h), 750°C (49-51 h), 775°C (14-16 h), 800°C (14-16 h), 825°C (14-16 h).

The niobium-doped positive electrode materials were analyzed and tested according to the method described in Example 1, with a nominal specific capacity of 180 mAh/g. The results were shown in Table 8.

**Table 8**

| Product | A | B | PPD | Initial discharge specific capacity at 0.1C (mAh/g) | Capacity retention rate after 200 cycles at 1C (%) |
|---|---|---|---|---|---|
| Example 8-1 | 5.97 | 29.92 | 178.62 | 213.4 | 95.7 |
| Example 8-2 | 4.13 | 26.49 | 109.40 | 222.1 | 94.6 |
| Example 8-3 | 2.68 | 21.56 | 57.78 | 228.7 | 94.5 |
| Example 8-4 | 2.18 | 18.94 | 41.28 | 230.2 | 94 |
| Example 8-5 | 1.89 | 15.36 | 29.03 | 235.3 | 93.6 |
| Example 8-6 | 2.01 | 12.63 | 25.38 | 239.6 | 92.4 |
| Example 8-7 | 2.32 | 8.14 | 18.88 | 227.2 | 68.9 |

### Example 9

A positive electrode material was provided, and its preparation method included the following steps.
(1) NiSO₄·6H₂O, CoSO₄·H₂O, and MnSO₄·H₂O were weighed in a molar ratio of 9.5:0.25:0.25. They were respectively dissolved in deionized water to prepare 1.5-2.5 mol/L solutions. Meanwhile, a 3-5 mol/L NaOH solution and a 3-5 mol/L aqueous ammonia solution were also prepared.
(2) All the solutions prepared in step (1) were dropped into a reaction kettle via peristaltic pumps, and a coprecipitation reaction was carried out. The pH of a mixed solution was precisely controlled at 11-12 by adjusting a flow rate of the NaOH solution. The reaction temperature was controlled by water-bath heating at 50 °C, the stirring rate was set at 800 rpm, and nitrogen protection was maintained. The reaction was continuously performed for 5-6 h. Subsequently, aging was conducted for 12 h, and after washing and drying were completed, a coprecipitation precursor was obtained.
(3) The coprecipitation precursor and LiOH·H₂O were mixed in a molar ratio of 1:(1.06-1.1), then niobium pentoxide was added and a resulting mixture was ground uniformly. Then, the mixture was placed in a tube furnace under an oxygen atmosphere at atmospheric pressure (1 atm). In a first stage, the furnace was heated to 500 °C and held at this temperature for 4-6 h, and in a second stage, the furnace was heated to a temperature and held at this temperature for a time. After cooling, the niobium-doped positive electrode material LiNi_{0.95}Co_{0.025}Mn_{0.025}O₂ was obtained, where a doping amount of niobium in the niobium-doped positive electrode material was 1 mol%.

Herein, depending on the conditions in the second stage, parallel examples, Examples 9-1 to 9-6, were set. In these examples, X °C was respectively 700°C (14-16 h), 725°C (14-16 h), 725°C (49-51 h), 750°C (14-16 h), 775°C (14-16 h), and 800°C (14-16 h).

The niobium-doped positive electrode materials were analyzed and tested according to the method described in Example 1, with a nominal specific capacity of 180 mAh/g. The results were shown in Table 9.

**Table 9**

| Product | A | B | PPD | Initial discharge specific capacity at 0.1C (mAh/g) | Capacity retention rate after 200 cycles at 1C (%) |
|---|---|---|---|---|---|
| Example 9-1 | 4.37 | 28.02 | 122.44 | 205.8 | 98.5 |
| Example 9-2 | 3.24 | 24.61 | 79.73 | 216.3 | 98.2 |
| Example 9-3 | 2.68 | 18.42 | 49.36 | 219.3 | 97.3 |
| Example 9-4 | 2.41 | 19.17 | 46.19 | 224.7 | 96.8 |
| Example 9-5 | 1.72 | 12.36 | 21.25 | 230.1 | 96.6 |
| Example 9-6 | 1.977 | 9.34 | 18.46 | 233.6 | 78.3 |

### Example 10

A positive electrode material, the preparation method included the following steps.
(1) NiSO₄·6H₂O and MnSO₄·H₂O were weighed in a molar ratio of 9:1. They were respectively dissolved in deionized water to prepare 1.5-2.5 mol/L solutions. Meanwhile, a 3-5 mol/L NaOH solution and a 3-5 mol/L aqueous ammonia solution were also prepared.
(2) All the solutions prepared in step (1) were dropped into a reaction kettle via peristaltic pumps, and a coprecipitation reaction was carried out. The pH of a mixed solution was precisely controlled at 8-10 by adjusting a flow rate of the NaOH solution. The reaction temperature was controlled by water-bath heating at 50 °C, the stirring rate was set at 800 rpm, and nitrogen protection was maintained. The reaction was continuously performed for 5-6 h. Subsequently, aging was conducted for 12 h, and after washing and drying were completed, a coprecipitation precursor was obtained.
(3) The coprecipitation precursor and Li₂CO₃ were mixed in a molar ratio of 1:(0.5-0.55), then niobium pentoxide was added and ground uniformly. Then, a mixture was placed in a tube furnace under an oxygen atmosphere at atmospheric pressure (1 atm). In a first stage, the furnace was heated to 500 °C and held at this temperature for 4-6 h, and in a second stage, the furnace was heated to a temperature and held at this temperature for a time. After cooling, the niobium-doped positive electrode material LiNi_{0.9}Mn_{0.1}O₂ was obtained, where a doping amount of niobium in the niobium-doped positive electrode material was 0.5 mol%.

Herein, parallel examples, Examples 10-1 to 10-7, were set. In these examples, the preparation process differed only in the conditions in the second stage, which were shown as follows: 725°C (14-16 h), 750°C (14-16 h), 775°C (14-16 h), 800°C (14-16 h), 800°C (49-51 h), 825°C (14-16 h), 850°C (14-16 h).

The niobium-doped positive electrode materials were analyzed and tested according to the method described in Example 1, with a nominal specific capacity of 180 mAh/g. The results were shown in Table 10.

**Table 10**

| Product | A | B | PPD | Initial discharge specific capacity at 0.1C (mAh/g) | Capacity retention rate after 200 cycles at 1C (%) |
|---|---|---|---|---|---|
| Example 10-1 | 6.51 | 32.33 | 210.46 | 190.1 | 99.1 |
| Example 10-2 | 5.32 | 25.41 | 135.18 | 194.3 | 98.6 |
| Example 10-3 | 4.17 | 20.39 | 85.02 | 199.9 | 98 |
| Example 10-4 | 3.52 | 14.18 | 49.91 | 206.5 | 97.6 |
| Example 10-5 | 3.12 | 12.65 | 39.46 | 211.5 | 97.4 |
| Example 10-6 | 3.89 | 6.69 | 26.02 | 210.4 | 97.3 |
| Example 10-7 | 4.02 | 4.01 | 16.12 | 213.8 | 79.9 |

Comparing the products of Example 3 and Example 10, it can be seen that similar to the undoped positive electrode material LiNi_{0.9}Mn_{0.1}O₂, for the doped positive electrode material LiNi_{0.9}Mg_{0.1}O₂, when the calcination conditions are different (the calcination temperature being same), the mixed occupancy ratio A of lithium atoms to nickel atoms and the average number B of primary particles per square micron in a cross-section of secondary particles with a diameter of 5-15 µm also change. Only products of Examples 10-4 to 10-6 with PPD within the range defined by the present disclosure, exhibit good performance.

### Example 11

A positive electrode material was provided, and its preparation method included the following steps.
(1) NiSO₄·6H₂O and MnSO₄·H₂O were weighed in a molar ratio of 9.5:0.5. They were respectively dissolved in deionized water to prepare 1.5-2.5 mol/L solutions. Meanwhile, a 3-5 mol/L NaOH solution and a 3-5 mol/L aqueous ammonia solution were also prepared.
(2) All the solutions prepared in step (1) were dropped into a reaction kettle via peristaltic pumps, and a coprecipitation reaction was carried out. The pH of a mixed solution was precisely controlled at 8-10 by adjusting a flow rate of the NaOH solution. The reaction temperature was controlled by water-bath heating at 50 °C, the stirring rate was set at 800 rpm, and nitrogen protection was maintained. The reaction was continuously performed for 4-6 h. Subsequently, aging was conducted for 12 h, and after washing and drying were completed, a coprecipitation precursor was obtained.
(3) The coprecipitation precursor and Li₂CO₃ were mixed in a molar ratio of 1:(0.5-0.55), then niobium pentoxide was added and a resulting mixture was ground uniformly. Then, a mixture was placed in a tube furnace under an oxygen atmosphere at atmospheric pressure (50 atm). In a first stage, the furnace was heated to 500 °C and held at this temperature for 4-6 h, and in a second stage, the furnace was heated to a temperature and held at this temperature for a time. After cooling, the niobium-doped positive electrode material LiNi_{0.95}Mn_{0.05}O₂ was obtained, where a doping amount of niobium in the niobium-doped positive electrode material was 0.5 mol%.

Herein, parallel examples, Examples 11-1 to 11-8, were set. In these examples, the preparation process differed only in the conditions in the second stage, which were shown as follows: 725°C (14-16 h), 750°C (14-16 h), 775°C (14-16 h), 800°C (14-16 h), 800°C (74-76 h), 800°C (149-151 h), 825°C (14-16 h), 850°C (14-16 h).

The niobium-doped positive electrode materials were analyzed and tested according to the method described in Example 1, with a nominal specific capacity of 180 mAh/g. The results were shown in Table 11.

**Table 11**

| Product | A | B | PPD | Initial discharge specific capacity at 0.1C (mAh/g) | Capacity retention rate after 200 cycles at 1C (%) |
|---|---|---|---|---|---|
| Example 11-1 | 6.95 | 34.23 | 237.89 | 187.3 | 99.1 |
| Example 11-2 | 5.72 | 26.64 | 152.38 | 191.1 | 98.7 |
| Example 11-3 | 4.64 | 22.09 | 102.49 | 195.9 | 98.2 |
| Example 11-4 | 3.77 | 15.16 | 57.15 | 202.8 | 98.1 |
| Example 11-5 | 3.12 | 14.15 | 44.14 | 206.8 | 97.6 |
| Example 11-6 | 3.02 | 13.18 | 39.80 | 208.9 | 98.1 |
| Example 11-7 | 4.01 | 8.69 | 34.84 | 206.4 | 97.6 |
| Example 11-8 | 4.34 | 4.54 | 19.70 | 208.4 | 83.7 |

### Example 12

A positive electrode material was provided, and its preparation method included the following steps.
(1) NiSO₄·6H₂O and CoSO₄·H₂O were weighed in a molar ratio of 9:1. They were respectively dissolved in deionized water to prepare 1.5-2.5 mol/L solutions. Meanwhile, a 3-5 mol/L NaOH solution and a 3-5 mol/L aqueous ammonia solution were also prepared.
(2) All the solutions prepared in step (1) were dropped into a reaction kettle via peristaltic pumps, and a coprecipitation reaction was carried out. The pH of a mixed solution was precisely controlled at 8-10 by adjusting a flow rate of the NaOH solution. The reaction temperature was controlled by water-bath heating at 50 °C, the stirring rate was set at 800 rpm, and nitrogen protection was maintained. The reaction continuously was performed for 4-6 h. Subsequently, aging was conducted for 12 h, and after washing and drying were completed, a coprecipitation precursor was obtained.
(3) The coprecipitation precursor and LiOH·H₂O were mixed in a molar ratio of 1:(1.05-1.1) and ground uniformly. Then, a resulting mixture was placed in a tube furnace under an oxygen atmosphere at atmospheric pressure (1 atm). In a first stage, the furnace was heated to 500 °C and held at this temperature for 4-6 h, and in a second stage, the furnace was heated to a temperature and held at this temperature for a time. After cooling, the positive electrode material LiNi_{0.9}Co_{0.01}O₂ was obtained.

Herein, parallel examples, Examples 12-1 to 12-6, were set. In these examples, the preparation process differed only in the conditions in the second stage, which were shown as follows: 700°C (14-16 h), 725°C (14-16 h), 725°C (49-51 h), 750°C (14-16 h), 775°C (14-16 h), 800°C (14-16 h).

The positive electrode materials were analyzed and tested according to the method described in Example 1, with a nominal specific capacity of 180 mAh/g. The results were shown in Table 12.

**Table 12**

| Product | A | B | PPD | Initial discharge specific capacity at 0.1C (mAh/g) | Capacity retention rate after 200 cycles at 1C (%) |
|---|---|---|---|---|---|
| Example 12-1 | 3.53 | 25.19 | 88.92 | 197.3 | 91.8 |
| Example 12-2 | 2.61 | 16.63 | 43.40 | 210.1 | 91.4 |
| Example 12-3 | 2.15 | 12.48 | 26.83 | 215.8 | 90.8 |
| Example 12-4 | 2.4 | 9.22 | 22.12 | 213.6 | 86.6 |
| Example 12-5 | 1.92 | 5.33 | 10.23 | 218.5 | 49.7 |
| Example 12-6 | 2.12 | 2.58 | 5.46 | 208.6 | 38.5 |

### Example 13

A positive electrode material, the preparation method included the following steps.
(1) NiSO₄·6H₂O, CoSO₄·H₂O, and MnSO₄·H₂O were weighed in a molar ratio of 8:1:1. They were respectively dissolved in deionized water to prepare 1.5-2.5 mol/L solutions. Meanwhile, a 3-5 mol/L NaOH solution and a 3-5 mol/L aqueous ammonia solution were also prepared.
(2) All the solutions prepared in step (1) were dropped into a reaction kettle via peristaltic pumps, and a coprecipitation reaction was carried out. The pH of a mixed solution was precisely controlled at 11-12 by adjusting a flow rate of the NaOH solution. The reaction temperature was controlled by water-bath heating at 50 °C, the stirring rate was set at 800 rpm, and nitrogen protection was maintained. The reaction was continuously performed for 5-6 h. Subsequently, aging was conducted for 12 h, and after washing and drying were completed, a coprecipitation precursor was obtained.
(3) The coprecipitation precursor and LiOH·H₂O were mixed in a molar ratio of 1:(1.06-1.1) and were ground uniformly. Then, a resulting mixture was placed in a tube furnace under an oxygen atmosphere at atmospheric pressure (1 atm). In a first stage, the furnace was heated to 500 °C and held at this temperature for 4-6 h, and in a second stage, the furnace was heated to a temperature and held at this temperature for a time. After cooling, the positive electrode material LiNi_{0.8}Co_{0.1}Mn_{0.1}O₂ was obtained.

Herein, parallel examples, Examples 13a-1 to 13a-6, were set. In these examples, the preparation process differed only in the conditions in the second stage, which were shown as follows: 725°C (14-16 h), 750°C (14-16 h), 750°C (74-76 h), 775°C (14-16 h), 800°C (14-16 h), 825°C (14-16 h).

The positive electrode materials were analyzed and tested according to the method described in Example 1, with a nominal specific capacity of 180 mAh/g. The results were shown in Table 13a.

**Table 13a**

| Product | A | B | PPD | Initial discharge specific capacity at 0.1C (mAh/g) | Capacity retention rate after 200 cycles at 1C (%) |
|---|---|---|---|---|---|
| Example 13a-1 | 3.26 | 24.81 | 80.88 | 180.5 | 89.1 |
| Example 13a-2 | 2.15 | 20.46 | 43.98 | 193.2 | 88.5 |
| Example 13a-3 | 1.76 | 15.78 | 27.77 | 196.4 | 88.2 |
| Example 13a-4 | 1.83 | 14.17 | 25.93 | 199.3 | 87.6 |
| Example 13a-5 | 1.72 | 8.73 | 15.01 | 205.6 | 76.4 |
| Example 13a-6 | 1.76 | 4.25 | 7.48 | 207.2 | 68.9 |

Subsequently, the same coprecipitation precursor was prepared according to the above method. The coprecipitation precursor and LiOH·H₂O were mixed in a molar ratio of 1:(1.06-1.1) and ground uniformly. Then, a resulting mixture was placed in a high-pressure tube furnace under an oxygen atmosphere (50 atm), heated to 500°C and held at this temperature for 4-6 h in the first stage, then heated to a temperature and held at this temperature for a time in the second stage. After cooling, the positive electrode material LiNi_{0.8}Co_{0.1}Mn_{0.1}O₂ was obtained.

Herein, parallel examples, Examples 13b-1 to 13b-8, were set. In these examples, the preparation process differed only in the conditions in the second stage, which were shown as follows: 725°C (14-16 h), 750°C (14-16 h), 750°C (74-76 h), 775°C (14-16 h), 775°C (74-76 h), 800°C (14-16 h), 825°C (14-16 h), 850°C (14-16 h).

The positive electrode materials were analyzed and tested according to the above method, and the results were shown in Table 13b.

**Table 13b**

| Product | A | B | PPD | Initial discharge specific capacity at 0.1C (mAh/g) | Capacity retention rate after 200 cycles at 1C (%) |
|---|---|---|---|---|---|
| Example 13b-1 | 3.32 | 29.74 | 98.73 | 184.5 | 99.1 |
| Example 13b-2 | 2.25 | 25.31 | 56.94 | 195 | 99.2 |
| Example 13b-3 | 1.89 | 23.89 | 45.15 | 197 | 99.1 |
| Example 13b-4 | 1.84 | 17.19 | 31.62 | 198.1 | 98.6 |
| Example 13b-5 | 1.59 | 15.78 | 25.09 | 199.8 | 98.4 |
| Example 13b-6 | 1.68 | 9.31 | 15.64 | 200.2 | 78.4 |
| Example 13b-7 | 1.49 | 8.25 | 12.29 | 206.3 | 58.1 |
| Example 13b-8 | 1.77 | 5.99 | 10.60 | 210.8 | 43.6 |

### Example 14

A positive electrode material was provided, and its preparation method included the following steps.
(1) NiSO₄·6H₂O, CoSO₄·H₂O, and MnSO₄·H₂O were weighed in a molar ratio of 8:1:1. They were respectively dissolved in deionized water to prepare 1.5-2.5 mol/L solutions. Meanwhile, a 3-5 mol/L NaOH solution and a 3-5 mol/L aqueous ammonia solution were also prepared.
(2) All the solutions prepared in step (1) were dropped into a reaction kettle via peristaltic pumps, and a coprecipitation reaction was carried out. The pH of a mixed solution was precisely controlled at 11-12 by adjusting a flow rate of the NaOH solution. The reaction temperature was controlled by water-bath heating at 50 °C, the stirring rate was set at 800 rpm, and nitrogen protection was maintained. The reaction was continuously performed for 4-6 h. Subsequently, aging was conducted for 12 h, and after washing and drying were completed, a coprecipitation precursor was obtained.
(3) The coprecipitation precursor and LiOH·H₂O were mixed in a molar ratio of 1:(1.06-1.1), then niobium pentoxide was added and a resulting mixture was ground uniformly. Then, the mixture was placed in a tube furnace under an oxygen atmosphere at atmospheric pressure (1 atm). In a first stage, the furnace was heated to 500 °C and held at this temperature for 4-6 h, and in a second stage, the furnace was heated to a temperature and held at this temperature for a time. After cooling, the niobium-doped positive electrode material LiNi_{0.8}Co_{0.1}Mn_{0.1}O₂ was obtained, where a doping amount of niobium in the niobium-doped positive electrode material was 2 mol%.

Herein, parallel examples, Examples 14-1 to 14-8, were set. In these examples, the preparation process differed only in the conditions in the second stage, which were shown as follows: 725°C (14-16 h), 750°C (14-16 h), 775°C (14-16 h), 800°C (14-16 h), 800°C (74-76 h), 800°C (149-151 h), 825°C (14-16 h), 850°C (14-16 h).

**Table 14**

| Product | A | B | PPD | Initial discharge specific capacity at 0.1C (mAh/g) | Capacity retention rate after 200 cycles at 1C (%) |
|---|---|---|---|---|---|
| Example 14-1 | 5.63 | 36.14 | 203.46 | 174.5 | 99.1 |
| Example 14-2 | 5.05 | 30.31 | 153.06 | 178.2 | 99.1 |
| Example 14-3 | 4.24 | 22.19 | 94.08 | 185.1 | 98.9 |
| Example 14-4 | 3.3 | 14.31 | 47.22 | 200.2 | 98.6 |
| Example 14-5 | 2.62 | 12.18 | 31.91 | 203.8 | 98.3 |
| Example 14-6 | 2.42 | 11.08 | 26.81 | 208.3 | 98.1 |
| Example 14-7 | 3.19 | 5.25 | 16.74 | 206.3 | 78.3 |
| Example 14-8 | 2.99 | 1.29 | 3.85 | 210.8 | 76.7 |

Finally, it should be noted that the above examples are only used to illustrate the technical solutions of the present disclosure and not to limit the protection scope thereof. Although the present disclosure has been described in detail with reference to preferred embodiments, those of ordinary skill in the art should understand that modifications or equivalent substitutions can be made to the technical solutions of the present disclosure without departing from the spirit and scope of the technical solutions of the present disclosure.

## Claims

1. A positive electrode material, comprising a lithium element and a nickel element, wherein the positive electrode material comprises primary particles and secondary particles formed by agglomeration of the primary particles, and the positive electrode material satisfies: 20 ≤ A×B ≤ 50;
wherein A is a mixed occupancy ratio of lithium atoms to nickel atoms in the positive electrode material, and B is an average number of primary particles per square micron in a cross-section of secondary particles with a particle diameter of 5-15 µm in the positive electrode material.

2. The positive electrode material of claim 1, wherein the mixed occupancy ratio of lithium atoms to nickel atoms in the positive electrode material is in a range of from 1.2 to 5.

3. The positive electrode material of claim 1, wherein the average number of primary particles per square micron in a cross-section of secondary particles with a particle diameter of 5-15 µm in the positive electrode material is in a range of from 4 to 25.

4. The positive electrode material of claim 1, wherein the positive electrode material satisfies: 25 ≤ A×B ≤ 40.

5. The positive electrode material of claim 1, wherein the positive electrode material comprises LiNiₓM₁₋ₓO₂; wherein M is any one selected from the group consisting of Co, Mn, and Mg, and 0.7 ≤ x ≤ 0.98.

6. The positive electrode material of claim 5, wherein the positive electrode material is LiNiₓM₁₋ₓO₂; wherein 0.9 ≤ x ≤ 0.98.

7. The positive electrode material of claim 6, wherein the positive electrode material is LiNi_{0.9}M_{0.1}O₂; the mixed occupancy ratio of lithium atoms to nickel atoms in the positive electrode material is in a range of from 2.2 to 3.7, and the average number of primary particles per square micron in a cross-section of secondary particles with a particle diameter of 5-15 µm in the positive electrode material is in a range of from 5 to 18.

8. The positive electrode material of claim 6, wherein the positive electrode material is LiNi_{0.95}M_{0.05}O₂; the mixed occupancy ratio of lithium atoms to nickel atoms in the positive electrode material is in a range of from 3 to 4.5, and the average number of primary particles per square micron in a cross-section of secondary particles with a particle diameter of 5-15 µm in the positive electrode material is in a range of from 4 to 14.

9. The positive electrode material of claim 6, wherein the positive electrode material is LiNi_{0.98}M_{0.02}O₂; the mixed occupancy ratio of lithium atoms to nickel atoms in the positive electrode material is in a range of from 2 to 3.6, and the average number of primary particles per square micron in a cross-section of secondary particles with a particle diameter of 5-15 µm in the positive electrode material is in a range of from 9 to 17.

10. The positive electrode material of claim 1, wherein the positive electrode material comprises LiNi_{y}Co_{z}M'_{1-y-z}O₂; wherein M' is any one selected from the group of Mn, Mg, and Al, 0.7 ≤ y ≤ 0.98, 0.05 ≤ z ≤ 0.3, and y+z < 1.

11. The positive electrode material of claim 10, wherein the positive electrode material is LiNi_{y}Co_{z}M'_{1-y-z}O₂; wherein 0.8 ≤ y ≤ 0.95.

12. The positive electrode material of claim 11, wherein the positive electrode material is LiNi_{0.8}Co_{0.1}M'_{0.1}O₂; the mixed occupancy ratio of lithium atoms to nickel atoms in the positive electrode material is in a range of from 1.5 to 2.2, and the average number of primary particles per square micron in a cross-section of secondary particles with a particle diameter of 5-15 µm in the positive electrode material is in a range of from 14 to 24.

13. The positive electrode material of claim 11, wherein the positive electrode material is LiNi_{0.9}Co_{0.05}M'_{0.05}O₂; the mixed occupancy ratio of lithium atoms to nickel atoms in the positive electrode material is in a range of from 1.5 to 2.3, and the average number of primary particles per square micron in a cross-section of secondary particles with a particle diameter of 5-15 µm in the positive electrode material is in a range of from 12 to 22.

14. The positive electrode material of claim 11, wherein the positive electrode material is LiNi_{0.95}Co_{0.025}M'_{0.025}O₂; the mixed occupancy ratio of lithium atoms to nickel atoms in the positive electrode material is in a range of from 2 to 2.6, and the average number of primary particles per square micron in a cross-section of secondary particles with a particle diameter of 5-15 µm in the positive electrode material is in a range of from 12 to 22.

15. The positive electrode material of claim 5 or 10, wherein the positive electrode material further comprises a doping element, and the doping element is at least one selected from the group consisting of niobium, tungsten, molybdenum, tantalum, titanium, zirconium, boron, aluminum, and magnesium.

16. The positive electrode material of claim 15, wherein the positive electrode material comprises the doping element, and a doping amount of the doping element in the positive electrode material is in a range of from 0.5 mol% to 5 mol%.

17. The positive electrode material of claim 16, wherein the positive electrode material comprises LiNiₓM₁₋ₓO₂ and niobium, 0.9 ≤ x ≤ 0.98; the mixed occupancy ratio of lithium atoms to nickel atoms in the positive electrode material is in a range of from 3 to 4.5, and the average number of primary particles per square micron in a cross-section of secondary particles with a particle diameter of 5-15 µm in the positive electrode material is in a range of from 6 to 15.

18. The positive electrode material of claim 16, wherein the positive electrode material comprises LiNi_{y}Co_{z}M'_{1-y-z}O₂ and niobium, with 0.8 ≤ y ≤ 0.95; the mixed occupancy ratio of lithium atoms to nickel atoms in the positive electrode material is in a range of from 1.2 to 3.5, and the average number of primary particles per square micron in a cross-section of secondary particles with a particle diameter of 5-15 µm in the positive electrode material is in a range of from 11 to 22.

19. The positive electrode material of claim 1, wherein a mass percentage of particles with a particle diameter of 5-15 µm in the positive electrode material is ≥ 50%.

20. The positive electrode material of claim 1, wherein a specific surface area of the positive electrode material is in a range of from 5 m²/g to 15 m²/g.

21. A secondary battery, comprising a positive electrode plate, a separator, and a negative electrode plate; wherein the positive electrode plate comprises the positive electrode material of any one of claims 1 to 20.

22. An electric device, comprising the secondary battery of claim 21, and the secondary battery serves as a power supply for the electric device.

23. The electric device of claim 22, comprising an automobile, an electric bicycle, a vessel, or a lighting device.
